# EUROPÄISCHE PATENTSCHRIFT

(11) **EP 3 899 877 B1**
(45) Veröffentlichungstag und Bekanntmachung des Hinweises auf die Patenterteilung: **05.06.2024**
(21) Anmeldenummer: 18830824.1
(22) Anmeldetag: 20.12.2018
(51) Int. Cl.: G07C 3/14

(54) **SENSORVORRICHTUNG ZUR DETEKTION EINES VON EINEM PROZESS BEEINFLUSSTEN ODER IN DEM PROZESS GEBILDETEN ZIELOBJEKTS**
SENSOR DEVICE FOR DETECTING A TARGET OBJECT INFLUENCED BY A PROCESS OR FORMED DURING THE PROCESS
DISPOSITIF DE CAPTEURS POUR LA DÉTECTION D'UN OBJET CIBLE INFLUENCÉ PAR UN PROCESSUS OU FORMÉ DANS UN PROCESSUS

(43) Veröffentlichungstag der Anmeldung: 27.10.2021
(73) Patentinhaber: SICK AG, 79183 Waldkirch/Breisgau (DE); TRUMPF Werkzeugmaschinen SE + Co. KG, 71254 Ditzingen (DE)
(72) Erfinder: OTTNAD, Jens, 76199 Karlsruhe (DE); WOLF, Dennis, 71277 Rutesheim (DE); LUTZ, Kevin, 71034 Böblingen (DE); BLÖMKER, Christoph, 70197 Stuttgart (DE); BURGER, Michael, 79263 Simonswald (DE); STEURER, Peter, 72351 Geislingen (DE); HIRT, Günter, 77790 Steinach (DE); KIENZLER, Stefan, 79106 Freiburg (DE)
(74) Vertreter: Manitz Finsterwald Patent- und Rechtsanwaltspartnerschaft mbB
(86) Internationale Anmeldenummer: PCT/EP2018/086311
(87) Internationale Veröffentlichungsnummer: WO 2020/126006

(56) Entgegenhaltungen:
- EP-A1- 2 037 297
- EP-A1- 2 413 159
- EP-A1- 2 915 627
- DE-A1- 4 305 559
- DE-A1-102004 038 906
- DE-U1- 9 306 724
- DE-U1-202007 014 313
- US-A1- 2005 205 763
- US-B1- 7 763 820

## Beschreibung

Die vorliegende Erfindung betrifft eine Werkzeugmaschine mit einer Sensorvorrichtung zur Detektion eines von einem Prozess beeinflussten oder in dem Prozess gebildeten Zielobjekts und eine Maschine mit einer Sensorvorrichtung.

Sensorvorrichtungen zur Detektion von Zielobjekten werden unter anderem in der Automatisierungs-, Fertigungs- und Verpackungstechnik eingesetzt, um Werkstücke oder andere in einem Automatisierungsprozess be- oder verarbeitete Objekte zu erkennen. Insbesondere kann mittels derartiger Sensorvorrichtungen ein Materialfluss in derartigen Anlagen überwacht werden. Das Messobjekt wird in der Regel von einer Sensoreinheit der Sensorvorrichtung erfasst. Derartige Sensoreinheiten können einen einzelnen Empfänger zur Erfassung des Zielobjekts aufweisen, sie können aber insbesondere auch mehrkanalig ausgebildet sein und mehrere Empfänger umfassen.

Die Zuverlässigkeit der Objektdetektion hängt oftmals von vorab eingestellten Schwellwerten der einzelnen Empfänger der Sensoreinheit ab. Die Schwellwerte bestimmen, bei welcher Signaländerung eines Empfängers ein Objekt oder Objektteil detektiert wird. Sind die Schwellwerte falsch eingestellt, kommt es zu Fehldetektionen von Störgrößen (beispielsweise kleinerer Fremdkörper, Schlacke, Rauchgasen, Stäube, Aerosole) oder alternativ zum Nicht-Detektieren des Objektes.

Wird eine Sensorvorrichtung in Werkzeugmaschinen bzw. in Fertigungsanlagen zur Überwachung des Materialflusses eingesetzt, so kann eine Fehldetektion von Störgrößen im schlimmsten Fall zu Maschinenschäden führen, weil sich das eigentlich zu detektierende Objekt unerwünscht noch in einem Arbeitsraum der Maschine befindet. Alternativ kann die Nicht-Detektion eines bereits ausgeschleusten Werkstückteils dazu führen, dass unnötigerweise der Fertigungsprozess in der Maschine unterbrochen wird, da fälschlicherweise davon ausgegangen wird, dass das Werkstück noch den Arbeitsraum der Maschine blockiert.

Die Schwellwerte müssen daher derart definiert sein, dass sie möglichst robust gegenüber einer Fehlauswertung von Störgrößen und gleichzeitig sensitiv genug für die prozesssichere Detektion des Zielobjekts sind. Dadurch lassen sich die Schwellwerte nur als Kompromiss aller Anforderungen definieren, was in der Regel die Genauigkeit bei der Detektion des einzelnen Objekts verringert. Außerdem ist es notwendig, die Schwellwerte für jeden Anwendungsfall neu zu bestimmen.

Aus der EP 2 915 627 A1 ist eine Maschine gemäß dem Oberbegriff des Anspruchs 1 bekannt. Die US 7 763 820 B1 offenbart ein System zum Klassifizieren von Proben mittels Röntgenstrahlung. Die DE 93 06 724 U1 betrifft ein Vermessen von Bauteilen, z.B. hinsichtlich Durchmesser und Gewindesteigung.

Die EP 2 413 159 A1 beschreibt einen entfernungsmessenden optoelektronischen Sensor, welcher auf einem Förderband geförderte Objekte identifiziert und mit hinterlegten Referenzobjekten vergleicht. Die EP 2 037 297 A1 beschreibt ein Lichtgitter, welches auf einem Transportband geförderte Objekte überwacht und überprüft, ob zuvor eingegebene oder eingelernte Kriterien wie Eintrittsbereich, Größe der Objekte oder Abstände zwischen den Objekten, eingehalten werden. Die DE 20 2007 014 313 U1 betrifft eine optoelektronischen Schutzeinrichtung bei der ein Schaltsignal zur Stillsetzung einer überwachten Anlage in Abhängigkeit von Objekten, die durch einen Erfassungsberiech zweier Kameras bewegt werden, erzeugt wird.

Die US 2005/0205763 A1 offenbart ein Lichtgitter zur Schutzbereichsüberwachung, welches auf einem Förderband transportierte Objekte erfasst und die dabei erzeugten Sensorsignale auf Übereinstimmung mit hinterlegten Referenzsignalen überprüft. Aus der DE 10 2004 038 906 A1 ist ebenfalls ein Lichtgitter zur Schutzbereichsüberwachung bekannt, welches auf einem Förderband transportierte Objekte erfasst und lediglich zulässige Objekte passieren lässt. Schließlich betrifft die DE 43 05 559 A1 ein Lichtgitter zur Konturerkennung von auf einem Förderband geförderten Flaschen, bei denen die einzelnen Lichtschranken des Lichtgitters mit einer von der Fördergeschwindigkeit abhängigen Abtastfrequenz ausgelesen werden. Weiterer Stand der Technik ist in US 7 763 820 offenbart.

Es ist Aufgabe der Erfindung, eine Maschine anzugeben, welche eine zuverlässige Detektion eines von einem Prozess beeinflussten bzw. in einem Prozess gebildeten Zielobjekts ermöglichen.

Diese Aufgabe wird gelöst durch eine Maschine gemäß Anspruch 1. Weiterbildungen sind jeweils in den abhängigen Ansprüchen angegeben.

Die Maschine gemäß Anspruch 1 umfasst eine Sensorvorrichtung, welche im Folgenden zunächst näher beschrieben wird: Die Sensorvorrichtung zur Detektion eines von einem Prozess beeinflussten oder in dem Prozess gebildeten Zielobjekts umfasst eine Sensoreinheit und eine Auswerteeinrichtung, wobei die Sensoreinheit dazu ausgebildet ist, das Zielobjekt in einem Erfassungsbereich der Sensoreinheit zu erfassen und ein durch das Zielobjekt beeinflussbares Sensorsignal zu erzeugen. Die Auswerteeinrichtung ist dazu ausgebildet, das Sensorsignal als eine erste Eingangsgröße zu verarbeiten und in Abhängigkeit von dem Sensorsignal ein Ausgangssignal zu erzeugen, welches die Detektion des Zielobjekts anzeigt. Ferner ist die Auswerteeinrichtung dazu ausgebildet, einen auf das Zielobjekt einwirkenden Prozessparameter des Prozesses und/oder einen das Zielobjekt charakterisierenden und durch den Prozess beeinflussten Zielobjektparameter als jeweils eine weitere Eingangsgröße zu verarbeiten und das Ausgangssignal in Abhängigkeit von dem Prozessparameter und/oder dem Zielobjektparameter zu erzeugen.

Die Erfindung basiert auf der Erkenntnis, dass der Prozess und Eigenschaften des in dem Prozess gebildeten oder beeinflussten Zielobjekts sich darauf auswirken, auf welche Art und Weise das Zielobjekt im Erfassungsbereich der Sensoreinheit erfasst wird. Insbesondere kann eine Lage des Zielobjekts, eine Kinematik oder ein Bewegungsablauf des Zielobjekts im Erfassungsbereich durch einen oder mehrere Prozessparameter des Prozesses sowie durch die Objekteigenschaften, insbesondere einen oder mehrere Zielobjektparameter, bestimmt werden. Folglich hängt auch das Sensorsignal, insbesondere der zeitliche Verlauf des Sensorsignals, von dem Prozess bzw. Prozessparameter sowie den Zielobjektparametern des in dem Prozess gebildeten oder von dem Prozess beeinflussten Zielobjekts ab, wobei der Signalverlauf beispielsweise durch eine Orientierung, Geschwindigkeit oder Rotationsbewegung des Zielobjekts im Erfassungsbereich beeinflusst wird.

Indem die Auswerteeinrichtung dazu ausgebildet ist, das Ausgangssignal nicht nur in Abhängigkeit von dem Sensorsignal, sondern auch in Abhängigkeit von dem Prozessparameter und/oder dem Zielobjektparameter zu erzeugen, kann die Auswerteeinrichtung den Einfluss des Prozesses und der durch den Zielobjektparameter repräsentierten Eigenschaften des Zielobjekts auf das Erfassen des Zielobjekts berücksichtigen und so das Zielobjekt besonders zuverlässig detektieren. Je nach Wert des Prozessparameters kann das Zielobjekt eine Vielzahl unterschiedlicher Sensorsignale erzeugen, die aus unterschiedlichen Bewegungsmustern bzw. Bewegungsabläufen des Zielobjekts in dem Erfassungsbereich der Sensoreinheit resultieren. Die Auswerteeinrichtung kann daher anhand des Prozessparameters bei der Verarbeitung des Sensorsignals eine Vorauswahl treffen, welche Sensorsignale durch das Zielobjekt zum Zeitpunkt der Erfassung des Sensorsignals erzeugt werden könnten und daher möglich sind.

Das Zielobjekt kann von dem Prozess dadurch beeinflusst werden, dass es während des Prozesses gehandhabt, bearbeitet, gebildet oder hergestellt wird. Das Zielobjekt kann insbesondere trennend bearbeitet oder in einem trennenden Bearbeitungsprozess hergestellt werden, etwa mittels einer Frässpindel, einer Säge, eines Schneidlasers, eines Wasserstrahls oder eines autogenen Brennschneiders. Das Zielobjekt kann auch lediglich bewegt werden, beispielsweise mittels eines Förderbandes.

Das von der Auswerteeinrichtung erzeugte Ausgangssignal kann die Detektion des Zielobjekts auch anzeigen oder andernfalls verneinen, insbesondere entweder anzeigen oder verneinen. Der Prozessparameter und/oder der Zielobjektparameter können jeweils eine zweite Eingangsgröße und ggf. als eine dritte Eingangsgröße von der Auswerteeinrichtung verarbeitet werden. Der Zielobjektparameter kann insbesondere unabhängig von dem Sensorsignal eingelesen werden, so dass der Zielobjektparameter nicht aus dem Sensorsignal abgeleitet wird oder abgeleitet werden muss.

Die Auswerteeinrichtung kann nicht nur dazu ausgebildet sein, den Prozessparameter und/oder den Zielobjektparameter zu verarbeiten und das Ausgangssignal lediglich in Abhängigkeit von dem Prozessparameter und/oder dem Objektparameter zu erzeugen. Die Offenbarung betrifft auch eine Auswerteeinrichtung, welche allgemein dazu ausgebildet ist, einen auf die Beeinflussung des Sensorsignals auf das Zielobjekt einwirkenden und durch den Prozess festgelegten Detektionsparameter einzulesen und als eine weitere Eingangsgröße zu verarbeiten. Die Auswerteeinrichtung kann auch dazu ausgebildet sein, mehrere derartige Detektionsparameter einzulesen und als weitere Eingangsgröße zu verarbeiten. Die Detektionsparameter können insbesondere unabhängig von dem Sensorsignal eingelesen werden, so dass die Detektionsparameter nicht aus dem Sensorsignal abgeleitet werden. Derartige Detektionsparameter können beispielsweise den Prozessparameter und/oder den Zielobjektparameter umfassen. Die Auswerteeinrichtung kann auch allgemein dazu ausgebildet sein, das Ausgangssignal in Abhängigkeit von dem Detektionsparameter zu erzeugen.

Die Sensoreinheit kann einen Empfänger zum Erfassen einer durch das Zielobjekt beeinflussten Messgröße umfassen und dazu ausgebildet sein, das Sensorsignal in Abhängigkeit von der Messgröße zu erzeugen. Die Sensoreinheit kann insbesondere als eine mehrkanalige Sensoreinheit ausgebildet sein und jeweils einen Empfänger und/oder einen Sender je Kanal umfassen (z.B. kann die Sensoreinheit ein Lichtgitter sein). Die Sensoreinheit kann dann dazu ausgebildet sein, jeweils ein Einzelsignal je Kanal zu erzeugen, und das Sensorsignal kann die Einzelsignale umfassen. Die Sensoreinheit kann dazu ausgebildet sein, die Empfänger sequenziell in einer vorbestimmten Reihenfolge abzufragen. Die Sensoreinheit kann ferner dazu ausgebildet sein, die Einzelsignale des Sensorsignals sequenziell zu erzeugen und auszugeben.

Die Sensoreinheit kann dazu ausgebildet sein, den zeitlichen Verlauf des Sensorsignals bzw. der Einzelsignale kontinuierlich an die Auswerteeinrichtung auszugeben. Die Sensoreinheit kann dazu ausgebildet sein, das Sensorsignal in Form von Rohdaten auszugeben, beispielsweise als ein digitales oder analoges Signal. Die Sensoreinheit kann auch dazu ausgebildet sein, eine Vorverarbeitung eines durch die Messgröße beeinflussten und von dem Empfänger erzeugten Messsignals durchzuführen und beispielsweise das Messsignal mit einem vorgegebenen Schwellenwert zu vergleichen. In diesem Fall kann das Sensorsignal aus dem Messsignal auf Grundlage der Vorverarbeitung erzeugt werden und beispielsweise als ein binäres Signal ein Über- oder Unterschreiten des Schwellenwerts anzeigen.

Die von der Sensoreinheit erfasste Messgröße kann insbesondere elektromagnetische Strahlung, beispielsweise Licht, sein. Die elektromagnetische Strahlung kann durch das Zielobjekt in dem Erfassungsbereich beispielsweise dadurch beeinflusst werden, dass sie von dem Zielobjekt abgeschattet wird. Die elektromagnetische Strahlung kann von dem Zielobjekt in dem Erfassungsbereich aber auch reflektiert werden.

Die Sensoreinheit kann einen oder mehrere Sender zur Erzeugung der elektromagnetischen Strahlung und einen oder mehrere Empfänger zum Erfassen der elektromagnetischen Strahlung umfassen. Dabei können eine Anzahl der Sender und eine Anzahl der Empfänger gleich sein. Außerdem kann jedem Empfänger genau ein Sender zugeordnet sein, sodass jeder Empfänger jeweils die Strahlung eines einzelnen Senders empfängt. Die elektromagnetische Strahlung der Sender kann in parallelen Strahlen gesendet werden. Die Sensoreinheit kann insbesondere als eine Lichtschranke, ein Lichtgitter, eine Kreuzlichtschranke oder ein Lichtvorhang ausgebildet sein.

Die Empfänger der Sensoreinheit können aber beispielsweise auch als Induktionssensoren zum Erfassen eines durch das Zielobjekt erzeugten Induktionsstroms, als Magnetsensoren zum Erfassen eines durch das Zielobjekt erzeugten Magnetfeldes oder als akustische Sensoren zum Erfassen eines durch das Zielobjekt erzeugten akustischen Signals ausgebildet sein.

Indem die Auswerteeinrichtung dazu ausgebildet ist, das Sensorsignal als eine erste Eingangsgröße und den Prozessparameter und/oder den Zielobjektparameter, bzw. allgemein den Detektionsparameter, als eine weitere Eingangsgröße zu verarbeiten, um das Ausgangssignal zu erzeugen, beeinflussen sowohl das Sensorsignal, als auch der Prozessparameter und/oder der Zielobjektparameter, bzw. allgemein der Detektionsparameter, das Ausgangssignal. Das Ausgangssignal kann als ein binäres Signal anzeigen, ob das Zielobjekt detektiert wurde oder nicht. Es kann aber auch anzeigen, ob eines von mehreren Zielobjekten und gegebenenfalls welches Zielobjekt detektiert wurde.

Die Auswerteeinrichtung kann dazu ausgebildet sein, bei dem Verarbeiten des Sensorsignals, sowie des Prozessparameters und/oder des Zielobjektparameters, bzw. allgemein des Detektionsparameters, eine Klassierung der Eingangsgrößen, also der zu verarbeitenden Kombination aus Sensorsignal und Prozessparameter und/oder aus Sensorsignal und Zielobjektparameter, bzw. allgemein aus Sensorsignal und Detektionsparameter, durchzuführen und die eingelesenen Eingangsgrößen einer von mehreren Ausgangsklassen zuzuordnen. Dabei repräsentiert das Ausgangssignal die Ausgangsklasse, in die die Eingangsgrößen eingeordnet wurden. Dabei kann jedem vorbekannten möglichen Zielobjekt jeweils eine Ausgangsklasse zugeordnet sein.

Die möglichen Zielobjekte können das in dem Prozess verarbeitete Zielobjekt umfassen. Die möglichen Zielobjekte können auch Störgrößen, etwa Fremdkörper, Schlacke, Rauchgase, Stäube, Aerosole, umfassen. Die möglichen Zielobjekte können auch ein weiteres in dem Prozess verarbeitbares Zielobjekt umfassen.

Die Auswerteeinrichtung kann beispielsweise dazu ausgebildet sein, das Sensorsignal und den Prozessparameter und/oder den Zielobjektparameter, bzw. allgemein den Detektionsparameter, zur Erzeugung des Ausgangssignals zu verarbeiten, indem sie das Sensorsignal mit vorgegebenen, möglichen Sensorsignalen vergleicht, wobei anhand des Prozessparameters und/oder des Zielobjektparameters, bzw. allgemein anhand des Detektionsparameters, bestimmt wird, welche möglichen Sensorsignale für den Vergleich herangezogen werden. Die möglichen Sensorsignale können durch Versuchsreihen und/oder Methoden des maschinellen Lernens ermittelt worden sein. Die Auswerteeinrichtung kann insbesondere dazu eingerichtet sein, einen zeitlichen Verlauf des Sensorsignals bzw. der Einzelsignale mit möglichen Signalverläufen zu vergleichen und anhand des Prozessparameters und/oder anhand des Zielobjektsparameters, bzw. allgemein anhand des Detektionsparameters, zu bestimmen, welche möglichen Signalverläufe für den Vergleich herangezogen werden.

In der Auswerteeinrichtung kann ein Modell, beispielsweise ein Klassifizierungsmodell oder ein Erwartungsmodell, hinterlegt sein und die Auswerteeinrichtung kann dazu ausgebildet sein, den Verlauf des Sensorsignals mittels des Modells auszuwerten. Das Modell kann beispielsweise als ein regelbasiertes Modell oder als ein Entscheidungsbaum in der Auswerteeinrichtung hinterlegt sein. Das Modell kann eine erste Regel, die eine Bedingung an das Sensorsignal stellt, und eine zweite Regel, die eine Bedingung an den Prozessparameter und/oder den Zielobjektparameter, bzw. allgemein an den Detektionsparameter, stellt, umfassen.

Der Prozessparameter kann beispielsweise dadurch auf das Zielobjekt einwirken, dass er Eigenschaften einer während des Prozesses erfolgenden Handhabung des Zielobjekts festlegt, etwa eine Geschwindigkeit eines das Zielobjekt transportierenden Förderbandes, oder eine auf das Zielobjekt einwirkende äußere Kraft festlegt, etwa einen Gasdruck eines Schneidgases beim Laserschneiden. Der Prozessparameter bestimmt, auf welche Art und Weise das Zielobjekt in dem Erfassungsbereich erfasst wird. Der Prozessparameter kann insbesondere eine Orientierung, eine Geschwindigkeit, eine Beschleunigung oder eine Rotation des Zielobjekts im Erfassungsbereich der Sensoreinheit beeinflussen. Der Prozessparameter kann auch festlegen, in welcher Lage, zu welchem Zeitpunkt und/oder mit welcher Dauer das Zielobjekt im Erfassungsbereich angeordnet ist.

Der Zielobjektparameter kann beispielsweise dadurch durch den Prozess beeinflusst werden, dass er anhand des während der Laufzeit des Prozesses zu beeinflussenden oder zu bildenden Zielobjekts vorgegeben wird. Beispielsweise können zur Laufzeit des Prozesses mehrere, sich in ihren Zielobjektparametern unterscheidende Zielobjekte beeinflusst oder gebildet werden. Wird das Zielobjekt während des Prozesses durch Bearbeitung eines Werkstücks gebildet, so kann der Zielobjektparameter beispielsweise durch ein die Bearbeitung steuerndes Steuerprogramm des Prozesses vorgegeben werden. Der Zielobjektparameter kann beispielsweise durch eine bei der Bearbeitung zu erstellende Geometrie oder Kontur des Zielobjekts beeinflusst werden. Der Zielobjektparameter kann beispielsweise die Geometrie oder Kontur beschreiben.

Bei einer Weiterbildung ist die Sensorvorrichtung dazu ausgebildet, das Zielobjekt zu detektieren, während sich das Zielobjekt in Bewegung befindet. Die Auswerteeinrichtung ist dazu ausgebildet, das Ausgangssignal in Abhängigkeit von einem zeitlichen Verlauf des Sensorsignals zu erzeugen. Dabei wirkt der Prozessparameter bevorzugt dadurch auf das Zielobjekt ein, dass der Prozessparameter den Bewegungsablauf des Zielobjekts in dem Erfassungsbereich der Sensoreinheit beeinflusst.

Indem das Zielobjekt detektiert wird, während es sich in Bewegung befindet, kann das Zielobjekt zur Laufzeit des Prozesses besonders schnell erkannt werden. Insbesondere ist kein Abbremsen oder Fixieren des Zielobjekts notwendig. Das Zielobjekt kann insbesondere im freien Fall durch den Erfassungsbereich detektiert werden. Der Bewegungsablauf des Zielobjekts kann insbesondere eine Geschwindigkeit, eine Rotation, eine Lage oder eine Beschleunigung des Zielobjekts umfassen.

Alternativ oder zusätzlich kann auch der Zielobjektparameter oder allgemein der Detektionsparameter dadurch auf das Zielobjekt einwirken, dass der Zielobjektparameter bzw. allgemein der Detektionsparameter den Bewegungsablauf des Zielobjekts in dem Erfassungsbereich beeinflusst. Dies kann beispielsweise bei einem eine Masse oder einen Luftwiderstand des Zielobjekts repräsentierenden Zielobjektparameter bzw. Detektionsparameter der Fall sein.

Bei einer Weiterbildung der Sensorvorrichtung ist die Auswerteeinrichtung dazu ausgebildet, als Prozessparameter ein direktes Prozessdatum des Prozesses zu verarbeiten. Ein Datum im Sinne dieser Beschreibung stellt dabei eine einzelne Dateneinheit einer Mehrzahl von Daten dar. Insbesondere stellt das Prozessdatum eine einzelne Dateneinheit der beim Steuern des Prozesses erzeugten Prozessdaten dar. Das direkte Prozessdatum kann insbesondere ein Ausgangsdatum an einen im Rahmen des Prozesses auf das Zielobjekt einwirkenden Aktor sein und im Rahmen der Steuerung des Prozesses an den Aktor übertragen werden. Das direkte Prozessdatum kann beispielsweise von einer übergeordneten, den Prozess steuernden Steuereinheit erzeugt werden. Indem als zweite Eingangsgröße ein direktes Prozessdatum des Prozesses von der Auswerteeinrichtung verarbeitet wird, kann der auf das Zielobjekt einwirkende Prozessparameter besonders schnell und einfach ermittelt und an die Auswerteeinrichtung übertragen werden.

Alternativ oder zusätzlich kann auch der Zielobjektparameter, bzw. allgemein der Detektionsparameter, von dem direkten Prozessdatum beeinflusst oder durch das direkte Prozessdatum festgelegt sein.

Bei einer Weiterbildung der Sensorvorrichtung ist das direkte Prozessdatum ausgewählt aus der Gruppe von: einer Position des Zielobjekts, einer Orientierung des Zielobjekts, einem Schneidgasdruck einer das Zielobjekt bearbeitenden Trenneinrichtung, einer Umdrehungszahl eines das Zielobjekt bearbeitenden Werkzeugs, einer Geschwindigkeit eines das Zielobjekt bewegenden Antriebs, einem Drehmoment eines das Zielobjekt bewegenden Antriebs, einem Ausschleuszeitpunkt des Zielobjekts aus dem Prozess. Der Ausschleuszeitpunkt bezeichnet dabei den Zeitpunkt, an dem das Zielobjekt den Prozess verlässt. Beispielsweise kann der Ausschleuszeitpunkt bei einer trennenden Bearbeitung eines Werkstücks denjenigen Zeitpunkt bezeichnen, zu dem ein das Zielobjekt bildendes Werkstückteil freigetrennt worden ist.

Bei einer Weiterbildung der Sensorvorrichtung umfasst die Sensorvorrichtung eine Vorverarbeitungseinheit, wobei die Vorverarbeitungseinheit dazu ausgebildet ist, den Prozessparameter und/oder den Zielobjektparameter als einen indirekten Prozessparameter und/oder als einen indirekten Zielobjektparameter aus mindestens einem direkten Prozessdatum des Prozesses abzuleiten und der Auswerteeinrichtung zuzuführen. Allgemein kann die Vorverarbeitungseinheit dazu ausgebildet sein, den Detektionsparameter als einen indirekten Detektionsparameter aus mindestens einem direkten Prozessdatum des Prozesses abzuleiten und der Auswerteeinrichtung zuzuführen.

Der indirekte Prozessparameter kann aus dem direkten Prozessdatum unter Berücksichtigung eines Anlagenparameters der den Prozess ausführenden Anlage und/oder unter Berücksichtigung des das Zielobjekt charakterisierenden Zielobjektparameters abgeleitet werden. Der Anlagenparameter kann beispielsweise eine Massenträgheit eines beweglichen Elements der Anlage repräsentieren. Der Zielobjektparameter kann beispielsweise eine Masse, eine Fläche oder einen Luftwiderstand des Zielobjekts repräsentieren. In der Vorverarbeitungseinheit kann ein Modell, besondere ein physikalisches Modell, des Zielobjekts und/oder des das Zielobjekt beeinflussenden Prozesses hinterlegt sein und die Vorverarbeitungseinheit kann dazu ausgebildet sein, den indirekten Prozessparameter aus dem Modell abzuleiten, wobei das direkte Prozessdatum einen Eingangsparameter des Modells darstellt.

Indem der Prozessparameter und/oder der Zielobjektparameter, bzw. allgemein der Detektionsparameter, zunächst in der Vorverarbeitungseinheit aus dem direkten Prozessdatum abgeleitet wird, kann die Genauigkeit und/oder Geschwindigkeit bei der Verarbeitung der Eingangsgrößen in der Auswerteeinrichtung verbessert werden, da bei der Verarbeitung der Eingangsgrößen in der Auswerteeinrichtung die Zusammenhänge zwischen dem direktem Prozessdatum und indirektem Prozessparameter und/oder zwischen dem direktem Prozessdatum und dem indirektem Zielobjektparameter, bzw. allgemein zwischen dem direktem Prozessdatum und dem indirekten Detektionsparameter, nicht mehr berücksichtigt werden müssen.

Bei einer Weiterbildung der Sensorvorrichtung ist der indirekte Prozessparameter ausgewählt aus der Gruppe von: einem Abstand oder einer Lage oder einer Orientierung des Zielobjekts zu der Sensoreinheit während des Prozesses, einer Stärke einer auf das Zielobjekt während des Prozesses einwirkenden Kraft, einem Objektbereich, in dem während des Prozesses eine Kraft auf das Zielobjekt einwirkt. Insbesondere kann der indirekte Prozessparameter die Kinematik des Zielobjekts im Erfassungsbereich abbilden.

Der das Zielobjekt charakterisierende und durch den Prozess beeinflusste Zielobjektparameter kann ein Geometrieparameter sein, der eine Geometrie des Zielobjekts charakterisiert.

Ein die Geometrie charakterisierender Zielobjektparameter kann insbesondere die räumliche Ausdehnung oder geometrische Eigenschaft des Zielobjekts beschreiben. Der Zielobjektparameter kann zusammen mit einer Vielzahl von weiteren Parametern hinterlegt sein, etwa in Form von CAD-Daten, einer Vektorgrafik oder einer Punktwolke. Der Zielobjektparameter kann in der Auswerteeinrichtung hinterlegt sein, oder der Auswerteeinrichtung, beispielsweise durch die Vorverarbeitungseinheit, zugeführt werden. Der Zielobjektparameter kann insbesondere den Bewegungsablauf des Zielobjekts im freien Fall, d.h. dessen Orientierung, Geschwindigkeit, Beschleunigung oder Rotation, beeinflussen.

Die Sensorvorrichtung kann dazu ausgebildet sein, neben dem Zielobjekt eine Gruppe weiterer Zielobjekte zu detektieren, wobei das Zielobjekt und die weiteren Zielobjekte eine gemeinsame Objektklasse definieren. Dabei kann allen Zielobjekten der Objektklasse, insbesondere dem Zielobjekt und den weiteren Zielobjekten, der gleiche Zielobjektparameter zugeordnet sein.

Bei einer Weiterbildung der Sensorvorrichtung repräsentiert der Zielobjektparameter eine geometrische Eigenschaft des Zielobjekts, insbesondere eine Länge, eine Breite, eine Fläche, eine Kontur, eine Abmessung, ein kleinstes umhüllendes Rechteck oder eine konvexe Hülle des Zielobjekts. Der Zielobjektparameter kann insbesondere als einzelner Parameter hinterlegt sein. Dadurch kann der Zielobjektparameter besonders effizient verarbeitet werden.

Bei einer Weiterbildung der Sensorvorrichtung repräsentiert der Zielobjektparameter eine die Bewegung des Zielobjekts in dem Erfassungsbereich der Sensoreinheit beeinflussende Größe, insbesondere eine Masse, einen Luftwiderstand, ein Material oder eine Dichte des Zielobjekts.

Bei einer Weiterbildung der Sensorvorrichtung ist in der Auswerteeinrichtung eine aus Trainingsdaten gewonnene Modellinformation zur Abhängigkeit des Sensorsignals von dem Prozessparameter und/oder dem Zielobjektparameter hinterlegt, wobei die Modellinformation einen Zusammenhang zwischen dem Prozessparameter und möglichen Sensorsignalen bei unterschiedlichen Werten des Prozessparameters und/oder einen Zusammenhang zwischen dem Zielobjektparameter und den möglichen Sensorsignalen bei unterschiedlichen Werten des Zielobjektparameters umfasst und wobei die Auswerteeinrichtung dazu ausgebildet ist, das Eingangssignal anhand der Modellinformation zu verarbeiten.

Allgemein kann bei einer Weiterbildung der Sensorvorrichtung in der Auswerteeinrichtung eine aus Trainingsdaten gewonnene Modellinformation zur Abhängigkeit des Sensorsignals von dem Detektionsparameter hinterlegt sein, wobei die Modellinformation einen Zusammenhang zwischen dem Detektionsparameter und möglichen Sensorsignalen bei unterschiedlichen Werten des Detektionsparameter umfasst und wobei die Auswerteeinrichtung dazu ausgebildet ist, das Eingangssignal und den Detektionsparameter anhand der Modellinformation zu verarbeiten.

Das der Modellinformation zugrundeliegende Modell kann eine mathematische bzw. algorithmische Formulierung darstellen, welche Zusammenhänge zwischen der ersten Eingangsgröße und der weiteren Eingangsgröße und verschiedenen möglichen Sensorsignalen, die durch das Zielobjekt bei bestimmten Werten der ersten und weiteren Eingangsgröße erzeugt werden können, abbildet.

Das Modell kann beispielsweise als Erwartungsmodell oder als Klassifizierungsmodell hinterlegt sein. Das Modell kann mehrere Modellinformationen umfassen, welche verschiedene mögliche Sensorsignale bereitstellen. Die möglichen Sensorsignale können sich aus den unterschiedlichen möglichen Bewegungsabläufen des Zielobjekts im Erfassungsbereich, insbesondere aus möglichen Geschwindigkeiten, etwa Rotationsgeschwindigkeiten und/oder Schwerpunktsgeschwindigkeiten, und/oder aus möglichen räumlichen Orientierungen des Zielobjekts, ergeben. Die Auswerteeinrichtung kann insbesondere dazu ausgebildet sein, durch einen Vergleich zwischen dem tatsächlich detektierten Sensorsignal und den verschiedenen möglichen Sensorsignalen eine Klassierung des Sensorsignals und so eine Unterscheidung zwischen dem Zielobjekt und Störgrößen auszuführen.

Das Modell kann als ein regelbasiertes Modell oder als Entscheidungsbaum ausgebildet sein und die Modellinformation als Regeln umfassen. So kann beispielsweise für konvexe Zielobjekte als eine Regel in dem Modell hinterlegt sein, dass stets direkt benachbarte Empfänger der Sensoreinheit das Zielobjekt detektieren müssen und keine Empfänger "übersprungen" werden dürfen. Das Modell kann die Modellinformation in Form einer Abfolge von Regeln umfassen, anhand derer festgelegt ist, welche Merkmale das Sensorsignal aufweisen muss, damit es das Zielobjekt repräsentiert.

Das Modell kann auch als Regelwerk, beispielsweise in Tabellenform, hinterlegt sein, so dass die verschiedenen möglichen Sensorsignale in der Auswerteeinrichtung aus dem Regelwerk zur Auswertung ausgelesen werden können. Beispielsweise kann das Regelwerk eine Vielzahl von Signalverläufen umfassen, welche unterschiedlichen zu klassifizierende Objekten zugeordnet sind. Die Signalverläufe können in Testreihen oder Simulationen mit einer Vielzahl von Zielobjekten ermittelt worden sein.

Das Modell kann mittels eines "supervised-learning" Verfahrens aus den Trainingsdaten gewonnen worden sein. Die Trainingsdaten können in Versuchsreihen mittels unterschiedlicher Zielobjekte, insbesondere mittels des in dem Prozess beeinflussten oder gebildeten Zielobjekts und zusätzlicher, Störobjekte bzw. Störgrößen repräsentierender Zielobjekte erfasst worden sein. Die Trainingsdaten können in realen Prozessabläufen gemessen oder in Simulationen des Prozesses erzeugt worden sein. Die Trainingsdaten umfassen insbesondere Sensorsignale für alle zu detektierenden Zielobjekte. Dabei umfassen die Trainingsdaten jedes Zielobjekts mehrere Sensorsignale, welche bei unterschiedlichen Werten des Prozessparameters und/oder bei unterschiedlichen Werten des Zielobjektparameters, bzw. allgemein bei unterschiedlichen Werten des Detektionsparameters, gewonnen wurden. Dadurch kann sichergestellt werden, dass in dem Modell die Zusammenhänge zwischen möglichen Sensorsignalen und dem Prozessparameter und/oder Zielobjektparameter, bzw. allgemein zwischen möglichen Sensorsignalen und dem Detektionsparameter, korrekt hinterlegt sind.

Das Modell kann insbesondere mittels eines neuronalen Netzes aus den Trainingsdaten gewonnen worden sein. Insbesondere kann der Zusammenhang zwischen dem Prozessparameter und/oder dem Zielobjektparameter, bzw. allgemein dem Detektionsparameter, und den möglichen Sensorsignalen mittels eines neuronalen Netzes aus den Trainingsdaten erzeugt worden sein, wobei die Trainingsdaten dem neuronalen Netz als Eingangsdaten zugeführt worden sind.

Die Sensorvorrichtung kann dazu ausgebildet sein, neben dem Zielobjekt eine Gruppe weiterer Zielobjekte zu detektieren, wobei das Zielobjekt und die weiteren Zielobjekte eine gemeinsame Objektklasse definieren. Das von der Auswerteeinrichtung zur Verarbeitung der Eingangsgrößen verwendete Modell kann nur mit Trainingsdaten eines Zielobjekts der Objektklasse erstellt bzw. trainiert worden sein. Dadurch kann die Auswerteeinrichtung besonders einfach programmiert werden.

Bei einer Weiterbildung der Sensorvorrichtung ist die Modellinformation zur Abhängigkeit des Sensorsignals von dem Prozessparameter und/oder dem Zielobjektparameter in der Auswerteeinrichtung in einem regelbasierten Modell, in einem Entscheidungsbaum, als ein Regressionsmodell, als ein neuronales Netz oder als ein rekursives neuronales Netz implementiert.

Allgemein kann die Modellinformation zur Abhängigkeit des Sensorsignals von dem Detektionsparameter in der Auswerteeinrichtung in dem regelbasierten Modell, dem Entscheidungsbaum, als das Regressionsmodell, als das neuronale Netz oder als das rekursive neuronale Netz implementiert sein.

Ist die Modellinformation als ein neuronales Netz implementiert, so existiert ein neuronales Netz, welches mittels Trainingsdaten so trainiert wurde, dass es die Erkennung der Zielobjekte anhand der Eingangsgrößen ermöglicht. Die Eingangsgrößen, insbesondere das Sensorsignal und der Prozessparameter und/oder der Zielobjektparameter, bzw. allgemein der Detektionsparameter, stellen dann digitale Eingangswerte des neuronalen Netzes dar und das Ausgangssignal repräsentiert eine oder mehrere Ausgangsklassen des neuronalen Netzes.

Die Auswerteeinrichtung kann dazu ausgebildet sein, das neuronale Netz zur Prozesslaufzeit fortlaufend anzupassen und zu verbessern, d.h. anhand der zur Prozesslaufzeit erzeugten Sensorsignale zu trainieren. Beispielsweise kann die Auswerteeinrichtung dazu ausgebildet sein, eine Rückmeldung über Fehldetektionen zu empfangen und das neuronale Netz auf Grundlage der Rückmeldung anzupassen, um die Effizienz bei der Detektion des Zielobjekts zu verbessern.

Dadurch ist es möglich, die Modellinformation automatisiert, insbesondere erst bei einem Anwender der Sensorvorrichtung, einzulernen. Hierdurch reduziert sich der Projektierungsaufwand des Herstellers und die Projektierung kann vom Anwender selbst durchgeführt werden.

Bei einer Weiterbildung der Sensorvorrichtung ist in der Auswerteeinrichtung eine weitere Modellinformation zur Abhängigkeit des Sensorsignals von dem Prozessparameter und/oder dem Zielobjektparameter hinterlegt, wobei die Auswerteeinrichtung dazu ausgebildet ist, die Modellinformation oder die weitere Modellinformation anhand des Prozessparameters und/oder des Zielobjektparameters auszuwählen. Allgemein kann auch eine weitere Modellinformation zur Abhängigkeit des Sensorsignals von dem Detektionsparameter hinterlegt sein und die Auswerteeinrichtung kann dazu ausgebildet sein, die Modellinformation oder die weitere Modellinformation anhand des Detektionsparameters auszuwählen.

Dadurch kann eine auf den Prozessparameter und/oder den Zielobjektparameter, bzw. allgemein auf den Detektionsparameter, abgestimmte Modellinformation zur Detektion des Zielobjekts verwendet werden und die Genauigkeit der Detektion erhöht werden. Die Modellinformation und die weitere Modellinformation können insbesondere in unterschiedlichen Modellen in der Auswerteeinrichtung hinterlegt sein, sodass anhand des Prozessparameters und/oder des Zielobjektparameters, bzw. allgemein anhand des Detektionsparameters, eines von mehreren in der Auswerteeinrichtung hinterlegten Modellen ausgewählt wird. Die Modelle können insbesondere eine unterschiedliche Struktur aufweisen, beispielsweise kann ein erstes Modell regelbasiert ausgebildet sein, und ein zweites Modell kann als ein neuronales Netz implementiert sein.

Bei einer Weiterbildung ist die Sensorvorrichtung dazu ausgebildet, das Sensorsignal in einer von dem Prozessparameter und/oder von dem Detektionsparameter abhängigen Frequenz auszulesen. Allgemein kann die Sensorvorrichtung dazu ausgebildet sein, das Sensorsignal in einer von dem Detektionsparameter abhängigen Frequenz auszulesen. Dadurch kann das Erfassen des Sensorsignals beispielsweise an eine Bewegung des Zielobjekts im Erfassungsbereich angepasst und dadurch die Genauigkeit beim Erfassen des Zielobjekts erhöht werden, oder teileindividuell eine Anpassung der Sensorvorrichtung erfolgen.

Bei einer Weiterbildung ist die Sensorvorrichtung zur Detektion eines von dem Prozess beeinflussten weiteren Zielobjekts ausgebildet und die Auswerteeinrichtung ist dazu ausgebildet, ein weiteres Ausgangssignal zu erzeugen, welches die Detektion des weiteren Zielobjekts anzeigt. Dadurch kann eine Unterscheidung zwischen dem Zielobjekt und dem weiteren Zielobjekt durchgeführt werden und die Genauigkeit der Detektion des Zielobjekts verbessert werden. Das weitere Zielobjekt kann insbesondere ein Störobjekt sein, etwa bei dem Prozess erzeugte Rauchgase, Schlackebrocken, Staub, Aerosole oder Fremdpartikel. Ist die Auswerteeinrichtung dazu ausgebildet, das Sensorsignal und den Prozessparameter und/oder den Zielobjektparameter, bzw. allgemein den Detektionsparameter, dadurch zu verarbeiten, dass das Sensorsignal und der Prozessparameter bzw. der Zielobjektparameter bzw. der Detektionsparameter vorgegebenen Ausgangsklassen zugeordnet werden, kann das Ausgangssignal eine erste Ausgangsklasse und das weitere Ausgangssignal eine zweite Ausgangsklasse repräsentieren. Die Ausgangsklassen können mögliche Ergebnisse der durch die Sensorvorrichtung aufgeführten Detektionsmessung repräsentieren. So kann eine Ausgangsklasse die Detektion des Zielobjekts repräsentieren. Eine weitere Ausgangsklasse kann die Detektion des weiteren Zielobjekts repräsentieren. Noch eine weitere Ausgangsklasse kann eine Messung repräsentieren, bei der kein Objekt detektiert wurde, beispielsweise weder das Zielobjekt, noch das weitere Zielobjekt.

Bei einer Weiterbildung der Sensorvorrichtung weist die Sensoreinheit eine Mehrzahl von Sendern zum Aussenden von Licht- oder Laserstrahlen und eine Mehrzahl von Empfängern zum Empfangen der Strahlen auf, wobei die Empfänger dazu ausgebildet sind, Einzelsignale des Sensorsignals auf Grundlage der einzelnen empfangenen Strahlen zu erzeugen. Die Sensorvorrichtung kann insbesondere als Lichtschranke, Lichtgitter oder Lichtvorhang ausgebildet sein. Insbesondere kann die Sensorvorrichtung eine gleiche Anzahl von Sendern und Empfängern aufweisen und jedem Sender kann ein Empfänger zugeordnet sein. Mit einer derartigen Sensorvorrichtung können auch ausgedehnte Zielobjekte auf einfache Art und Weise erfasst und detektiert werden.

Bei einer Weiterbildung der Sensorvorrichtung ist das Sensorsignal durch das Zielobjekt dadurch beeinflussbar, dass das Zielobjekt mindestens einen der Strahlen unterbricht. Dadurch kann das Zielobjekt durch den den betreffenden Strahl erfassenden Empfänger besonders einfach erfasst werden.

Bei einer Weiterbildung der Sensorvorrichtung ist die Sensoreinheit dazu ausgebildet, die Einzelsignale in einer von dem Prozessparameter und/oder dem Zielobjektparameter abhängigen Reihenfolge auszulesen. Allgemein kann die Sensoreinheit dazu ausgebildet sein, die Einzelsignale in einer von dem Detektionsparameter abhängigen Reihenfolge auszulesen. Dadurch kann die Art und Weise, auf die das Zielobjekt erfasst wird, zur Laufzeit des Prozesses angepasst und die Genauigkeit der Detektion des Zielobjekts erhöht werden.

Die erfindungsgemäße Maschine zur Ausführung eines Prozesses ist dazu ausgebildet, im Rahmen des Prozesses ein Zielobjekt zu beeinflussen oder zu erzeugen, und umfasst eine Sensorvorrichtung zur Detektion des Zielobjekts. Die Sensorvorrichtung umfasst eine Sensoreinheit und eine Auswerteeinrichtung, wobei die Sensoreinheit dazu ausgebildet ist, das Zielobjekt in einem Erfassungsbereich der Sensoreinheit zu erfassen und ein durch das Zielobjekt beeinflussbares Sensorsignal zu erzeugen. Die Auswerteeinrichtung ist dazu ausgebildet, das Sensorsignal als eine erste Eingangsgröße zu verarbeiten und in Abhängigkeit von dem Sensorsignal ein Ausgangssignal zu erzeugen, welches die Detektion des Zielobjekts anzeigt. Außerdem ist die Auswerteeinrichtung dazu ausgebildet, einen auf das Zielobjekt einwirkenden Prozessparameter des Prozesses und/oder einen das Zielobjekt charakterisierenden und durch den Prozess beeinflussten Zielobjektparameter als jeweils eine weitere Eingangsgröße zu verarbeiten und das Ausgangssignal in Abhängigkeit von dem Prozessparameter und/oder dem Zielobjektparameter zu erzeugen.

Das durch die Auswerteeinrichtung erzeugte Ausgangssignal kann die Detektion des Zielobjekts auch anzeigen oder verneinen.

Die Maschine umfasst insbesondere die erfindungsgemäße Sensorvorrichtung. Die Maschine kann insbesondere einen Aktor umfassen, der das Zielobjekt im Rahmen des Prozesses beeinflusst. Der Aktor kann eine Lage des Zielobjekts oder eine Bewegung des Zielobjekts in dem Erfassungsbereich der Sensorvorrichtung beeinflussen. Insbesondere kann der Aktor eine Geschwindigkeit, Beschleunigung, Rotationsgeschwindigkeit oder einen Zeitpunkt eines Durchtritts des Zielobjekts durch den Erfassungsbereich der Sensoranordnung beeinflussen. Der Aktor kann das Zielobjekt im Rahmen des Prozesses handhaben oder bearbeiten. Der Aktor kann das Zielobjekt insbesondere trennend bearbeiten und als Frässpindel, Säge, Schneidlaser, Wasserstrahl oder autogener Brennschneider ausgebildet sein. Der Aktor kann das Zielobjekt auch lediglich bewegen, beispielsweise als Antriebsmotor eines Förderbandes. Die Maschine kann beispielsweise als Werkzeugmaschine oder Verpackungsmaschine ausgebildet sein. Erfindungsgemäß ist die Maschine als eine Werkzeugmaschine ausgebildet. Außerdem ist die Maschine dazu ausgebildet, bei der Ausführung des Prozesses ein vorzugsweise plattenartiges Werkstück unter Bildung eines freigetrennten Werkstückteils trennend zu bearbeiten, wobei das Zielobjekt durch das Werkstückteil gebildet wird. Die Maschine ist ferner dazu ausgebildet, bei der Ausführung des Prozesses das Werkstückteil von einer Werkstückauflage durch freien Fall in eine Abfuhrposition zu verbringen und die Sensoreinheit ist derart angeordnet, dass das Zielobjekt von der Sensoreinheit während des feien Falls in die Abfuhrposition erfasst wird. Die Auswerteeinrichtung ist dazu ausgebildet, das Zielobjekt zu detektieren, um festzustellen, ob das Zielobjekt die Abfuhrposition erreicht hat.

Die Maschine kann insbesondere als Laserschneidemaschine ausgebildet sein. Die Maschine kann einen Arbeitsraum mit der Werkstückauflage umfassen, und der Erfassungsbereich der Sensoreinheit kann unterhalb des Arbeitsraums angeordnet sein. Das Zielobjekt kann aus dem Arbeitsraum im freien Fall ausgeschleust werden und beim Fallen den Erfassungsbereich durchqueren. Zusätzlich zu dem Zielobjekt können auch bei der trennenden Bearbeitung anfallende Abfallprodukte als Störobjekte den Arbeitsraum im freien Fall verlassen. Die Auswerteeinrichtung kann dazu ausgebildet sein, bei der Detektion des Zielobjekts zwischen dem Zielobjekt und den Störobjekten zu unterscheiden. Die Maschine kann eine Aufnahmevorrichtung umfassen, welche dazu ausgebildet ist, das im freien Fall ausgeschleuste Zielobjekt aufzunehmen. Die Maschine kann dazu ausgebildet sein, die Aufnahmevorrichtung nur bei Detektion des Zielobjekts unterhalb des Arbeitsraums anzuordnen oder einen Zugang zu der Aufnahmevorrichtung nur dann zu ermöglichen bzw. zu öffnen, sodass die Aufnahmevorrichtung ausschließlich das Zielobjekt und nicht auch die Störobjekte aufnimmt. Der Erfassungsbereich der Sensoranordnung kann insbesondere zwischen dem Arbeitsraum und der unter dem Arbeitsraum angeordneten Aufnahmevorrichtung angeordnet sein.

Die Erfindung wird nachfolgend anhand von Figuren beispielhaft erläutert. Dabei zeigen in jeweils schematischer Darstellung:
- Fig. 1: eine Maschine zur Ausführung eines Prozesses mit einer Sensoranordnung zur Detektion eines durch den Prozess beeinflussten Zielobjekts;
- Fig. 2: eine zur trennenden Bearbeitung eines Werkstücks ausgebildete Ausführungsform der Maschine;
- Fig. 3: eine Sensoreinheit der Sensoranordnung mit dem Zielobjekt und ein Sensorsignal der Sensoranordnung;
- Fig. 4: die Sensoreinheit mit einem Störobjekt und einem zugehörigen Sensorsignal;
- Fig. 5: die Sensoreinheit mit dem Zielobjekt in einer ersten Orientierung und ein zugehöriges Sensorsignal;
- Fig. 6: die Sensoreinheit mit dem Zielobjekt in einer zweiten Orientierung und ein zugehöriges Sensorsignal;
- Fig. 7: die Sensoreinheit mit dem in einer dritten Orientierung mit einer ersten Geschwindigkeit bewegten Zielobjekt und ein zugehöriges Sensorsignal; und
- Fig. 8: die Sensoreinheit mit dem in der dritten Orientierung mit einer zweiten Geschwindigkeit bewegten Zielobjekt und ein zugehöriges Sensorsignal.

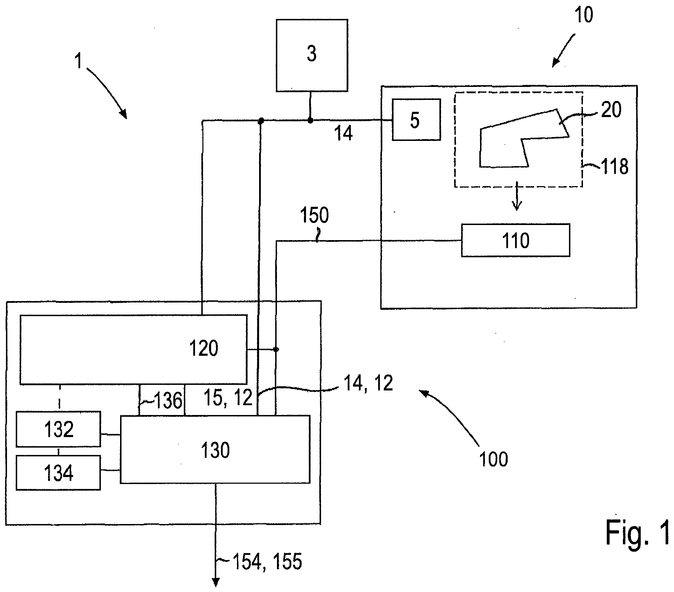

Fig. 1 zeigt eine Maschine 1 zur Ausführung eines Prozesses 10 mit einer Sensoranordnung 100 zur Detektion eines durch den Prozess 10 beeinflussten Zielobjekts 20. Die Maschine 1 umfasst einen Aktor 5, welcher auf das Zielobjekt 20 einwirkt und insbesondere eine Lage des Zielobjekts 20 oder einen Bewegungsablauf des Zielobjekts 20 bestimmt. Der Aktor 5 ist mit einer übergeordneten Steuereinheit 3 der Maschine 1 verbunden. Die übergeordnete Steuereinheit 3 umfasst ein Steuerprogramm, welches die zum Steuern des Prozesses 10 benötigten Informationen umfasst. Die Steuereinheit 3 ist dazu ausgebildet, anhand des Steuerprogramms ein Prozessdatum 14 zu erzeugen, welches Informationen zur Ansteuerung des Aktors 5 enthält, beispielsweise eine Stellung, einen Schaltzustand, eine Geschwindigkeit, eine Beschleunigung oder einen Antriebsstrom des Aktors 5, oder Informationen über das durch den Prozess 10 beeinflusste Zielobjekt 20, beispielsweise dessen Position oder Orientierung bei einem Ausschleusen aus dem Prozess 10.

Die Steuereinheit 3 übermittelt das Prozessdatum 14 an den Aktor 5, um den Aktor 5 und damit den Einfluss des Aktors 5 auf das Zielobjekt 20 zu steuern. Neben dem Prozessdatum 14 übermittelt die Steuereinheit 3 weitere Prozessdaten 14 an den Aktor 5. Das Prozessdatum 14 bildet ein direktes Prozessdatum. Ein direktes Prozessdatum 14 wird direkt durch den Aktor 5 verarbeitet und bestimmt den Steuerzustand des Aktors 5. Der Aktor 5 kann beispielsweise ein Motor sein und das direkte Prozessdatum 14 kann eine Geschwindigkeit des Motors steuern. Der Aktor 5 kann auch ein Ventil oder ein Schalter sein und das direkte Prozessdatum 14 kann die Position des Ventils oder Schalters steuern.

Die Maschine 1 umfasst eine Sensorvorrichtung 100 zur Detektion des Zielobjekts 20. Die Sensorvorrichtung 100 umfasst eine Sensoreinheit 110 und eine Auswerteeinrichtung 130. Die Sensoreinheit 110 ist dazu ausgebildet, das Zielobjekt 20 in einem Erfassungsbereich 118 der Sensoreinheit 110 zu erfassen und ein durch das Zielobjekt 20 beeinflussbares Sensorsignal 150 zu erzeugen. Die Sensoreinheit 110 kann insbesondere als eine Lichtschranke, ein Lichtgitter oder ein Lichtvorhang ausgebildet sein. Die Sensoreinheit 110 kann auch als eine Kamera oder als ein magnetischer, induktiver oder akustischer Sensor ausgebildet sein. Die Sensoreinheit 110 kann mehrkanalig ausgebildet sein, sodass das Sensorsignal 150 eine Mehrzahl von Einzelsignalen umfasst. Die Auswerteeinheit 130 und die Sensoreinheit 110 können in einem gemeinsamen Gehäuse oder getrennt voneinander angeordnet sein. Die Auswerteeinheit 130 kann auch in der übergeordneten Steuereinheit 3 angeordnet sein.

Die Sensoreinheit 110 ist mit der Auswerteeinrichtung 130 verbunden, um das Sensorsignal 150 an die Auswerteeinrichtung 130 zu übermitteln. Die Sensoreinheit 110 kann insbesondere dazu ausgebildet sein, während der Laufzeit des Prozesses 10 den zeitlichen Verlauf des Sensorsignals 150 an die Auswerteeinrichtung 130 zu übermitteln. Umfasst das Sensorsignal 150 mehrere Einzelsignale, so kann die Sensoreinheit 110 dazu ausgebildet sein, den zeitlichen Verlauf der Einzelsignale als das Sensorsignal 150 an die Auswerteeinrichtung 130 zu übermitteln. Die Auswerteeinrichtung 130 ist außerdem dazu ausgebildet, einen auf das Zielobjekt 20 einwirkenden Prozessparameter 12 zu empfangen. Der Prozessparameter 12 kann der Auswerteeinrichtung 130 als das direkte Prozessdatum 14 zugeführt werden. Hierzu kann die Sensoreinheit 110, wie dargestellt, mit der übergeordneten Steuereinheit 3 und/oder dem Aktor 5 verbunden sein. Der Auswerteeinrichtung 130 können zur Laufzeit des Prozesses 10 kontinuierlich die aktuellen Werte des Prozessparameters 12 zugeführt werden.

Alternativ oder zusätzlich kann die Auswerteeinrichtung 130 auch, wie ebenfalls dargestellt, mit einer Vorverarbeitungseinheit 120 der Sensorvorrichtung 100 verbunden sein und der Prozessparameter 12 kann der Auswerteeinrichtung 130 auch von der Vorverarbeitungseinheit 120 als ein indirekter Prozessparameter 15 zugeführt werden. Die Vorverarbeitungseinheit 120 und die Auswerteeinrichtung 130 können in einem gemeinsamen Gehäuse oder getrennt voneinander angeordnet sein. Insbesondere können die Vorverarbeitungseinheit 120, die Auswerteeinrichtung 130 und die übergeordnete Steuereinheit 3 in einem gemeinsamen Gehäuse angeordnet sein. Vorverarbeitungseinheit 120 die Auswerteeinrichtung 130 und/oder die übergeordnete Steuereinheit 3 können jeweils als programmierbare Logikbausteine, beispielsweise als Mikrocontroller oder FPGAs, ausgebildet sein.

Die Vorverarbeitungseinheit 120 ist mit der Steuereinheit 3 und/oder dem Aktor 5 verbunden und dazu ausgebildet, das direkte Prozessdatum 14 zu empfangen, beispielsweise von der Steuereinheit 3 und/oder dem Aktor 5. Die Vorverarbeitungseinheit 120 ist dazu ausgebildet, aus dem direkten Prozessdatum 14 den Prozessparameter 12 als den indirekten Prozessparameter 15 abzuleiten. Hierzu sind in der Vorverarbeitungseinheit 120 Ableitungsinformationen hinterlegt, welche einen Zusammenhang zwischen dem direkten Prozessdatum 14 und dem an die Auswerteeinrichtung 130 als den indirekten Prozessparameter 15 zu übermittelnden Prozessparameter 12 festlegen. Die Vorverarbeitungseinheit 120 kann beispielsweise Ableitungsinformationen umfassen, mittels denen aus dem direkten Prozessdatum 12 als indirekter Prozessparameter 15 ein Abstand oder eine Lage oder eine Orientierung des Zielobjekts 20 zu der Sensoreinheit 110, eine Stärke einer auf das Zielobjekt 20 einwirkenden Kraft oder ein Objektbereich, in dem während des Prozesses 10 eine Kraft auf des Zielobjekt 20 einwirkt, ableitbar ist. Die Ableitungsinformationen können insbesondere ein physikalisches Modell des Zielobjekts 20 und/oder der Maschine 1 umfassen.

Die Auswerteeinrichtung 130 ist dazu ausgebildet, das Sensorsignal 150 als eine erste Eingangsgröße und den Prozessparameter 12 als eine zweite Eingangsgrö-ße zu verarbeiten und in Abhängigkeit von diesen Eingangsgrößen ein Ausgangssignal 154 zu erzeugen. Das Ausgangssignal 154 zeigt an, ob das Zielobjekt 20 detektiert wurde oder nicht. Das Ausgangssignal 154 kann beispielsweise als ein binäres Signal ausgegeben werden.

Die Auswerteeinrichtung 130 kann auch dazu ausgebildet sein, alternativ zu oder neben dem Prozessparameter 12 und dem Sensorsignal 150 einen Zielobjektparameter 136 als eine zweite oder dritte Eingangsgröße zu verarbeiten und das Ausgangssignal 154 in Abhängigkeit von dem Zielobjektparameter 136 zu erzeugen. Der Zielobjektparameter 136 kann der Auswerteeinrichtung 130, wie dargestellt, durch die Vorverarbeitungseinheit 120 vorgegeben werden, der Zielobjektparameter 136 kann aber auch in der Auswerteeinrichtung 130 hinterlegt sein.

Der Zielobjektparameter 136 kann ein Geometrieparameter sein, der die Geometrie des Zielobjekts 20 beschreibt. Der Zielobjektparameter 136 kann auch ein Parameter sein, der eine physikalische Eigenschaft des Zielobjekts 20 beschreibt, etwa eine Masse, einen Luftwiderstand, eine Dichte, eine Oberflächenbeschaffenheit, eine Oberflächenrauheit, ein Material, eine Reflektivität oder eine Farbe des Zielobjekts 20. Der Zielobjektparameter 136 kann auch eine obere und/oder untere Grenze eines Geometrieparameters oder eine obere und/oder untere Grenze eines eine physikalische Eigenschaft des Zielobjekts 20 beschreibenden Parameters sein.

Dem Sensorsignal 150 wird mindestens ein zugehöriger Prozessparameter 12 und/oder mindestens ein zugehöriger Zielobjektparameter 136 zugeordnet. Insbesondere können die Vorverarbeitungseinheit 120 und/oder die Auswerteeinrichtung 130 dazu ausgebildet sein, dem Sensorsignal 150 mindestens einen zugehörigen Prozessparameter 12 und/oder mindestens einen zugehörigen Zielobjektparameter 136 zuzuordnen. Das Zuordnen kann anhand einer Kennung des Sensorsignals 150, die dem Sensorsignal 150 beispielsweise durch die Sensoreinheit 110 hinzugefügt wird, erfolgen. Bei der Kennung kann es sich beispielsweise um einen Zeitstempel handeln, welcher angibt, zu welcher Zeit das Sensorsignal 150 erfasst wurde. Die Vorverarbeitungseinheit 120 kann, wie dargestellt, mit der Sensoreinheit 110 verbunden sein, um die Kennung und/oder das Sensorsignal 150 zu empfangen.

In der Auswerteeinrichtung 130 ist eine Modellinformation 132 hinterlegt. Die Modellinformation 132 beschreibt einen Zusammenhang zwischen dem Prozessparameter 12 und/oder dem Zielobjektparameter 136 und möglichen Sensorsignalen 150. Insbesondere umfasst die Modellinformation 132 Informationen darüber, welche möglichen Sensorsignale 150 bei unterschiedlichen Werten des Prozessparameters 12 und/oder bei unterschiedlichen Werten des Zielobjektparameters 136 zu erwarten sind. Die Auswerteeinrichtung 130 ist dazu ausgebildet, das Sensorsignal 150, den Prozessparameter 12 und den Zielobjektparameter 136 anhand der Modellinformation 132 zu verarbeiten.

Die Modellinformation 132 kann in der Auswerteeinrichtung 130 in einem regelbasierten Modell, einem Entscheidungsbaum, als ein Regressionsmodell oder als ein neuronales Netz, insbesondere als ein rekursives neuronales Netz, hinterlegt sein. Das Sensorsignal 150, der Prozessparameter 12 und/oder der Zielobjektparameter 136 bilden jeweils Eingangsgrößen des Modells bzw. neuronalen Netzes.

Neben der Modellinformation 132 kann in der Auswerteeinrichtung 130 eine weitere Modellinformation 134 hinterlegt sein. Die weitere Modellinformation 134 kann in der Auswerteeinrichtung 130 hinterlegt sein, wie es für die Modellinformation 132 beschrieben wird. Dabei können die Modellinformation 132 und die weitere Modellinformation 134 auf unterschiedliche Art und Weise hinterlegt sein. Insbesondere können die Modellinformation 132 und die weitere Modellinformation 134 als unterschiedliche Modelle bzw. unterschiedliche neuronale Netze hinterlegt sein.

Die Auswerteeinrichtung 130 und/oder die Vorverarbeitungseinheit 120 können dazu ausgebildet sein, anhand des Zielobjektparameters 136 und/oder anhand des Prozessparameters 12 auszuwählen, ob die Eingangsgrößen mittels der Modellinformation 132 oder der weiteren Modellinformation 134 verarbeitet werden. Insbesondere können in der Auswerteeinrichtung 130 und/oder der Vorverarbeitungseinheit 120 Wertebereiche des Zielobjektparameters 136 und/oder des Prozessparameters 12 hinterlegt sein, welche der Modellinformation 132 oder der weiteren Modellinformation 134 zugeordnet sind. Die Modellinformation 132 kann zur Verarbeitung der Eingangsgrößen herangezogen werden, wenn der Zielobjektparameter 136 und/oder der Prozessparameter 12 innerhalb erster Wertebereiche liegen, und die weitere Modellinformation 134 kann zur Verarbeitung der Eingangsgrößen herangezogen werden, wenn der Zielobjektparameter 136 und/oder der Prozessparameter 12 innerhalb zweiter Wertebereiche liegen.

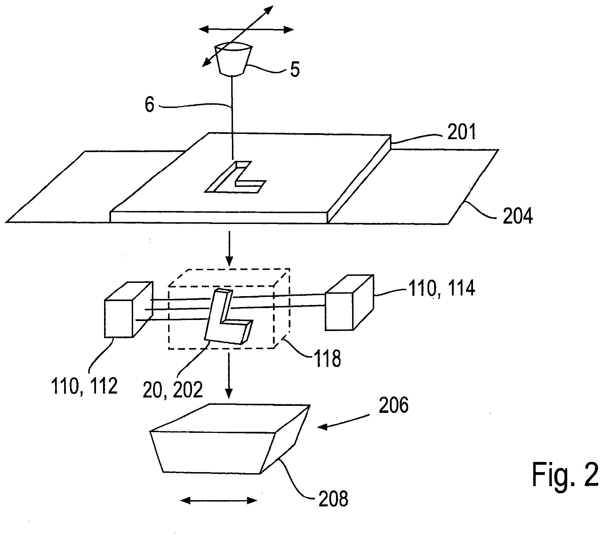

Fig. 2 zeigt eine Ausführungsform der Maschine 1, bei der die Maschine 1 bei dem Ausführen des Prozesses 10 ein Werkstück 201, insbesondere ein plattenförmiges Werkstück 201, trennend bearbeitet. Die Maschine 1 kann das Werkstück 201 insbesondere mittels Laserschneidens trennend bearbeiten. Die Maschine 1 umfasst eine Werkstückauflage 204, welche in einem Arbeitsraum der Maschine 1 angeordnet ist und auf welcher das Werkstück 201 während dem Bearbeiten angeordnet ist. Der Aktor 5 der Maschine 1 ist als ein Schneidkopf ausgebildet, welcher das Werkstück 201 mittels eines Schneidstrahls 6, insbesondere mittels eines Laserstrahls, und mittels eines Schneidgases bearbeitet.

Die Sensoreinheit 110 der Sensorvorrichtung 100 ist bei der in Fig. 2 dargestellten Maschine 1 unterhalb der Werkstückauflage 204 angeordnet. Insbesondere ist der Erfassungsbereich 118 der Sensoreinheit 110 unterhalb der Werkstückauflage 204 angeordnet. Die Sensoreinheit 110 ist als ein Lichtgitter ausgebildet. Die Sensoreinheit 110 umfasst mehrere Sender 112 und mehrere Empfänger 114, welche auf gegenüberliegenden Seiten des Erfassungsbereichs 118 der Sensoreinheit 110 angeordnet sind. Die Sender 112 sind dazu ausgebildet, Lichtstrahlen in Richtung der Empfänger 114 zu emittieren, und die Empfänger 114 sind dazu ausgebildet, die Lichtstrahlen zu empfangen und in das an die in Fig. 2 nicht dargestellte Auswerteeinrichtung 130 der Sensorvorrichtung 100 übermittelte Sensorsignal 150 umzuwandeln.

Die Maschine 1 ist dazu ausgebildet, das freigetrennte Werkstückteil 202 im freien Fall aus dem Arbeitsraum auszuschleusen. Der Erfassungsbereich 118 der Sensoreinheit 110 ist derart angeordnet, dass das freigetrennte Werkstückteil 202 während des freien Falls durch den Erfassungsbereich 118 hindurchtritt und dabei das von der Sensorvorrichtung 100 detektierte Zielobjekt 20 bildet. Bei dem Ausschleusen wird das Werkstückteil 202 zum einen durch die Gravitation, zum anderen durch die von dem Aktor 5 auf das Werkstückteil 202 ausgeübten Kräfte beschleunigt. Insbesondere wird das Werkstückteil 202 im Moment des Freischnitts durch einen Druck eines auf das Werkstückteil 202 einwirkenden Schneidgases beschleunigt.

Weist das Werkstückteil 202 eine große Ausdehnung und/oder Masse auf, so wird es hauptsächlich durch die Gravitation beschleunigt, während der Druck des Schneidgases lediglich einen geringen Einfluss auf die Beschleunigung des Werkstückteils 202 hat. Insbesondere fällt das Werkstückteil 202 in diesem Fall horizontal liegend und ohne Rotation durch den Erfassungsbereich 118 der Sensoreinheit 110. Weist das Werkstückteil 202 dagegen eine geringere Ausdehnung und/oder Masse auf, so wird das Werkstückteil 202 vornehmlich durch den Druck des Schneidgases beschleunigt und dabei in Rotation versetzt.

Bei der in Fig. 2 dargestellten Maschine 1 wird der Druck des Schneidgases als das direkte Prozessdatum 14 an die Auswerteeinrichtung 130 und/oder an die Vorverarbeitungseinheit 120 übermittelt. Außerdem wird die Masse und/oder die Ausdehnung des Werkstückteils 202 als der Zielobjektparameter 136 an die Auswerteeinrichtung 130 und/oder die Vorverarbeitungseinheit 120 übermittelt. Die Vorverarbeitungseinheit 120 kann dazu ausgebildet sein, aus der Masse und/oder der Ausdehnung des Werkstückteils 202 und/oder dem Druck des Schneidgases eine Rotationsgeschwindigkeit des Werkstückteils 202 zu berechnen und die Rotationsgeschwindigkeit als indirekten Prozessparameter an die Auswerteeinrichtung 130 zu übermitteln.

Die Auswerteeinrichtung 130 verarbeitet das von der Sensoreinheit 110 erzeugte Sensorsignal 150 als eine erste Eingangsgröße und den Druck des Schneidgases und/oder die von der Vorverarbeitungseinheit 120 ermittelte Rotationsgeschwindigkeit als eine zweite Eingangsgröße. Außerdem kann die Auswerteeinrichtung 130 die Masse und/oder die Ausdehnung des Werkstückteils 202 als eine dritte Eingangsgröße verarbeiten.

Bei der trennenden Bearbeitung des Werkstücks 201 können neben dem freigetrennte Werkstückteil 202 auch Störobjekte, beispielsweise Schlackebrocken, erzeugt werden, welche ebenfalls durch den Erfassungsbereich 118 der Sensoreinheit 110 hindurchtreten. Die Auswerteeinheit 130 kann dazu ausgebildet sein, die erfassten Objekte als das Zielobjekt 20 oder als Störobjekte zu klassifizieren, und das Ausgangssignal 154 zu erzeugen, wenn das erfasste Objekt als das Zielobjekt 20 klassifiziert wurde, oder ein weiteres Ausgangssignal zu erzeugen, wenn das erfasste Objekt als ein Störobjekt klassifiziert wurde.

Der Erfassungsbereich 118 der Sensoreinheit 110 ist zwischen der Werkstückauflage 204 und einer Abfuhrposition 206 angeordnet. Die Abfuhrposition 206 ist unterhalb des Erfassungsbereichs 118 der Sensoreinheit 110 angeordnet. Das das Zielobjekt 20 bildende freigetrennte Werkstückteil 202 wird von der Sensoreinheit 110 während des freien Falls in die Abfuhrposition 206 erfasst. Eine Detektion des Zielobjekts 20 durch die Auswerteeinrichtung 130 der Sensorvorrichtung 110 zeigt an, dass das Zielobjekt 20 die Abfuhrposition 206 erreicht hat.

Das Zielobjekt 20 fällt in der Abfuhrposition 206 in ein in der Abfuhrposition 206 angeordnete Aufnahmevorrichtung 208. Die Aufnahmevorrichtung 208 kann als ein Transportmittel, beispielsweise als ein Sortierwagen, ausgebildet sein. Die Maschine 1 ist dazu ausgebildet, die Aufnahmevorrichtung 208 nur dann in die Abfuhrposition 206 zu bewegen, wenn das Zielobjekt 20 von der Sensorvorrichtung 100 detektiert wird. In allen anderen Fällen, insbesondere bei Detektion eines Störobjekts, etwa eines Schlackebrockens, kann die Abfuhrposition 206 freigehalten werden oder es kann eine weitere Aufnahmevorrichtung, beispielsweise ein Schlackewagen, in der Abfuhrposition 206 angeordnet sein.

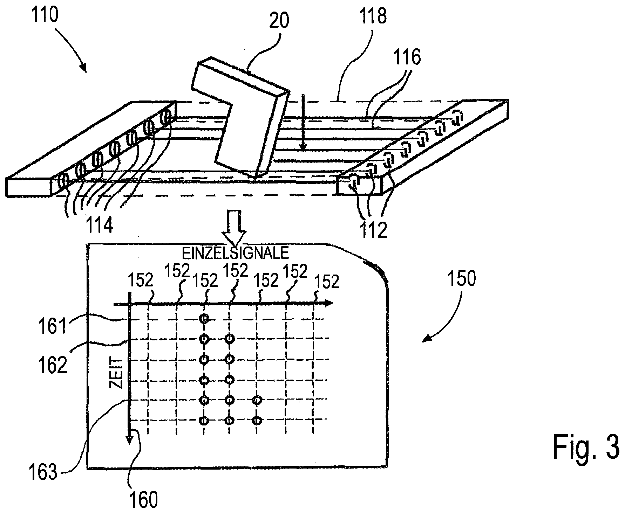

Fig. 3 zeigt die Sensoreinheit 110 mit dem Zielobjekt 20 und das durch das Zielobjekt 20 erzeugte Sensorsignal 150. Die Sensoreinheit 110 umfasst mehrere Sender 112 und mehrere Empfänger 114.

In Fig. 3 ist der zeitliche Verlauf der Einzelsignale 152 dargestellt und die Einzelsignale 152 gegen eine Zeit 160 aufgetragen. Die Zeit 160 kann beispielsweise Zeitpunkte angeben, zu denen die Empfänger 114 ausgelesen oder ein von den Empfängern 114 erzeugtes Messsignal abgetastet wird.

Beim Durchtritt des Zielobjekts 20 durch den Erfassungsbereich 118 der Sensoreinheit 110 wird aufgrund der L-förmigen Geometrie des Zielobjekts 20 zu einem ersten Zeitpunkt 161 nur ein einzelner Strahl 116 unterbrochen. Zu einem späteren zweiten Zeitpunkt 162 hat sich das Zielobjekt 20 derart weiterbewegt, dass sich ein breiterer Abschnitt des Zielobjekts 20 in einer durch die Sensoreinheit 110 definierten Messlinie befindet, als zu dem ersten Zeitpunkt 161. Daher werden zu dem zweiten Zeitpunkt 162 aufgrund der Translation des Zielobjekts 20 zwei benachbart angeordnete Strahlen 116 unterbrochen. Analog werden zu einem noch späteren dritten Zeitpunkt 163 drei benachbart angeordnete Strahlen 116 unterbrochen.

Die Auswerteeinrichtung 130 ist dazu ausgebildet, anhand des dargestellten zeitlichen Verlaufs des Sensorsignals 150, insbesondere anhand des zeitlichen Verlaufs der Einzelsignale 152, das Zielobjekt 20 zu detektieren. Dabei kann insbesondere berücksichtigt werden, ob und gegebenenfalls wie viele benachbarte Strahlen 116 unterbrochen werden, und in welcher zeitlichen Abfolge dies erfolgt.

Die in der Auswerteeinrichtung 130 hinterlegte Modellinformation 132 kann unter anderem mögliche Sensorsignale 150 umfassen, die bei Durchtritt des Zielobjekts 20 durch den Erfassungsbereich 118 auftreten können. Die Modellinformation 132 kann unter anderem Informationen darüber enthalten, wie viele benachbart angeordnete Strahlen 116 bei Durchtritt des Zielobjekts 20 mindestens oder höchstens unterbrochen werden. Außerdem kann die Modellinformation 132 Informationen darüber enthalten, wie lange einzelne Strahlen 116 bei Durchtritt des Zielobjekts 20 mindestens oder höchstens unterbrochen werden. Die Modellinformation 132 kann die genannten Informationen zu mehreren Zielobjekten 20 umfassen. Das Zielobjekt 20, dessen zugeordnete Informationen bei Verarbeitung der Eingangsgrößen durch die Auswerteeinrichtung 130 herangezogen werden sollen, kann anhand des Zielobjektparameters 136 und/oder anhand des Prozessparameters 12 ausgewählt werden.

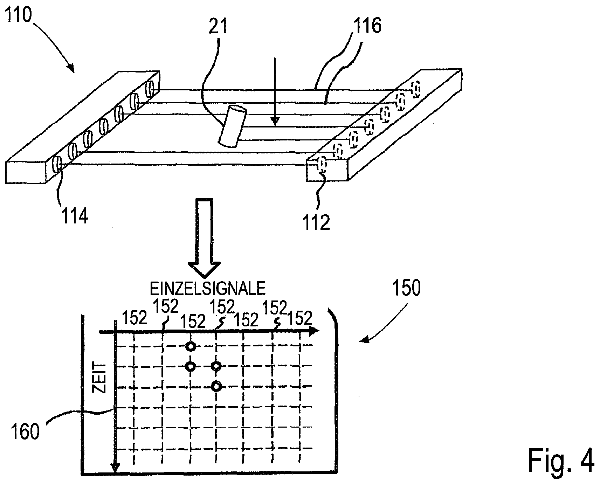

Fig. 4 zeigt die Sensoreinheit 110 bei Durchtritt eines weiteren Zielobjekts 21 und das zugehörige Sensorsignal 150. Bei dem weiteren Zielobjekt 21 kann es sich insbesondere um das Störobjekt handeln. Das weitere Zielobjekts 21 weist eine geringere Ausdehnung, insbesondere eine geringere Länge und Breite, als das in Fig. 3 dargestellte Zielobjekt 20 auf. Folglich zeigen die Einzelsignale 152 bei Durchtritt des weiteren Zielobjekts 21 an, dass die Strahlen 116 während einer geringeren Zeitdauer unterbrochen werden und dass weniger Strahlen 116 gleichzeitig unterbrochen werden, als es bei Durchtritt des Zielobjekts 20 der Fall ist. Die Auswerteeinrichtung 130 ist dazu ausgebildet, das weitere Zielobjekts 21 anhand des in Fig. 4 dargestellten zeitlichen Verlaufs der Sensorsignale 150 zu detektieren und insbesondere von dem Zielobjekt 20 zu unterscheiden. Außerdem ist die Auswerteeinrichtung 130 dazu ausgebildet, das die Detektion des weiteren Zielobjekts 21 anzeigende weitere Ausgangssignal zu erzeugen.

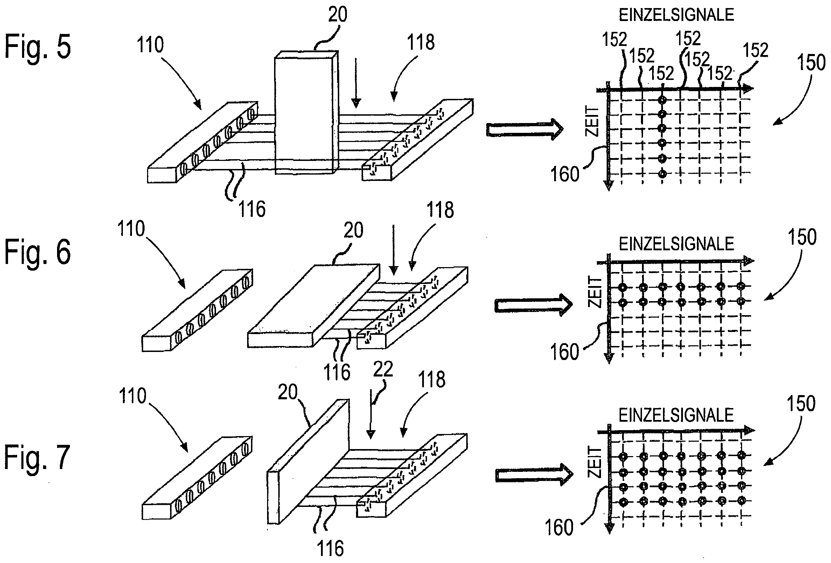

Fig. 5 zeigt die Sensoreinheit 110 bei Durchtritt des Zielobjekts 20 in einer ersten Orientierung, sowie das zugehörige Sensorsignal 150. Fig. 6 zeigt die Sensoreinheit 110 bei Durchtritt des Zielobjekts 20 in einer zweiten Orientierung, sowie das zugehörige Sensorsignal 150. Fig. 7 zeigt die Sensoreinheit 110 bei Durchtritt des Zielobjekts 20 in einer dritten Orientierung und das zugehörige Sensorsignal 150.

Das Zielobjekt 20 ist plattenförmig ausgebildet. In der ersten Orientierung tritt das Zielobjekt 20 der Länge nach durch den Erfassungsbereich 118 der Sensoreinheit 110. Dabei wird ein einzelner Strahl 116 unterbrochen. In der zweiten Orientierung tritt das Zielobjekt 20 der Höhe nach durch den Erfassungsbereich 118 der Sensoreinheit 110. Dabei werden mehrere, insbesondere sieben, benachbart angeordnete Strahlen 116 gleichzeitig unterbrochen. Die Strahlen 116 werden während einer kürzeren Zeitdauer unterbrochen, als es bei dem in Fig. 5 dargestellten Durchtritt des Zielobjekts 20 in der ersten Orientierung der Fall ist.

In der dritten Orientierung tritt das Zielobjekt 20 der Breite nach durch den Erfassungsbereich 118 der Sensoreinheit 110. Dabei werden wiederum mehrere benachbart angeordnete Strahlen 116 gleichzeitig unterbrochen. Die Anzahl der gleichzeitig unterbrochenen Strahlen 116 entspricht der Anzahl Strahlen 116, die bei dem in Fig. 6 dargestellten Durchtritt des Zielobjekts in der zweiten Orientierung unterbrochen werden. Jedoch werden die Strahlen 116 bei dem in Fig. 7 dargestellten Durchtritt in der dritten Orientierung für einen längeren Zeitraum unterbrochen, als es bei dem Durchtritt des Zielobjekts 20 in der zweiten Orientierung der Fall ist.

Der Wert des Prozessparameters 12 und/oder der Wert des Zielobjektparameters 136, bzw. allgemein der Wert eines Detektionsparameters, kann festlegen, ob das Zielobjekt 20 den Erfassungsbereich 118 der Sensoreinheit 110 in der ersten Orientierung, in der zweiten Orientierung oder in der dritten Orientierung passiert. Indem die Auswerteeinrichtung 130 den Prozessparameter 12 und/oder den Zielobjektparameter 136, bzw. allgemein den Detektionsparameter, als weitere Eingangsgröße(n) verarbeitet, erhält die Auswerteeinrichtung 130 Informationen darüber, welches der in Fig. 5, Fig. 6 und Fig. 7 dargestellten Sensorsignale 150 mit welcher Wahrscheinlichkeit die Detektion des Zielobjekts 20 anzeigt. Diese Informationen können insbesondere als Modellinformation 132 in der Auswerteeinrichtung 130 hinterlegt sein.

In Fig. 7 bewegt sich das Zielobjekt 20 in der dritten Orientierung mit einer ersten Geschwindigkeit 22 durch den Erfassungsbereich 118 der Sensoreinheit 110.

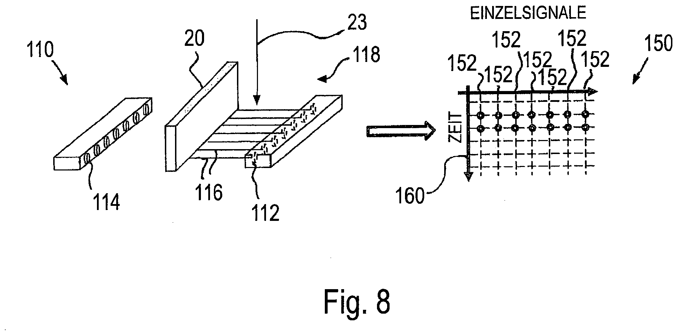

Fig. 8 zeigt die Sensoreinheit 110 mit dem Zielobjekt 20, wobei sich das Zielobjekt 20 in der dritten Orientierung mit einer zweiten Geschwindigkeit 23 durch den Erfassungsbereich 118 der Sensoreinheit 110 bewegt. Die zweite Geschwindigkeit 23 ist größer als die erste Geschwindigkeit 22. Das in Fig. 8 dargestellte zugehörige Sensorsignal 150 zeigt an, dass die gleiche Anzahl benachbart angeordneter Strahlen 116 unterbrochen wird, wie bei dem in Fig. 7 dargestellten Durchtritt des Zielobjekts 20 mit der ersten Geschwindigkeit 22. Die Strahlen 116 werden bei dem Durchtritt des Zielobjekts 20 mit der zweiten Geschwindigkeit 23 während einer kürzeren Zeitdauer unterbrochen, als es bei dem Durchtritt des Zielobjekts 20 mit der ersten Geschwindigkeit 22 der Fall ist.

Anhand des Prozessparameters 12 und/oder des Zielobjektparameters 136, bzw. allgemein anhand des Detektionsparameters, kann die Auswerteeinrichtung 130 Informationen darüber erhalten, mit welcher Wahrscheinlichkeit das in Fig. 7 oder das in Fig. 8 dargestellte Sensorsignal 150 die Detektion des Zielobjekts 20 anzeigt. Diese Informationen können insbesondere als Modellinformation 132 in der Auswerteeinrichtung 130 hinterlegt sein.

Der Zusammenhang zwischen dem Wert des direkten Prozessdatums 14 und/oder des Zielobjektparameters 136, bzw. allgemein der Zusammenhang zwischen dem Wert des Detektionsparameters, und den in den Figuren 5, 6, 7 und 8 dargestellten Sensorsignalen 150 kann direkt in der Modellinformation 132 der Auswerteeinrichtung 130 hinterlegt sein und das Prozessdatum 14 kann der Auswerteeinrichtung 130 als der Prozessparameter 12 zugeführt werden. Alternativ kann der Auswerteeinrichtung 130 auch von der Vorverarbeitungseinheit 120 die Orientierung und/oder die Geschwindigkeit des Zielobjekts 20 als der Prozessparameter 12 zugeführt werden. In diesem Fall sind in der Vorverarbeitungseinheit 120 Vorverarbeitungsinformationen hinterlegt, welche den möglichen Werten des direkten Prozessdatums 14 jeweils eine Orientierung und/oder eine Geschwindigkeit des Zielobjekts 20 zuordnen und die Vorverarbeitungseinheit 120 ist dazu ausgebildet, die an die Auswerteeinrichtung 130 zu übermittelnde Orientierung und/oder Geschwindigkeit des Zielobjekts 20 anhand eines physikalischen Modells und basierend auf dem direkten Prozessdatum 14 auszuwählen.

Die Vorverarbeitungseinheit 120 und/oder die Auswerteeinrichtung 130 können in der Steuereinheit 3 der Maschine 1 implementiert sein oder auf einer räumlich entfernten Datenverarbeitungseinheit ausgebildet sein. Die räumlich entfernte Datenverarbeitungseinheit kann serverbasiert oder cloudbasiert ausgebildet sein. Bei einer serverbasierten Ausführung sind die Vorverarbeitungseinheit 120 und/oder die Auswerteeinrichtung 130 auf einem Server ausgebildet ist, der über eine Datenverbindung mit mehreren Steuereinheiten mehrerer Maschinen verbunden ist. Auf den Server kann nur innerhalb eines Unternehmens, insbesondere nur von einem Fabrikationsstandort aus zugegriffen werden.

Bei einer cloudbasierten Ausführung sind mehrere Unternehmen oder mehrere Standorte über eine Datenverbindung, beispielsweise über das Internet, an eine zentrale cloudbasierte Datenverarbeitungseinheit angebunden, und die Vorverarbeitungseinheit 120 und/oder die Auswerteeinrichtung 130 sind auf der zentralen cloudbasierten Datenverarbeitungseinheit ausgebildet. Eine cloudbasierte Datenverarbeitungseinheit kann örtlich entfernt von mehreren nicht miteinander verbundenen Unternehmen oder Fabrikationseinheiten angeordnet sein.

Auf der räumlich entfernten Datenverarbeitungseinheit kann der Prozessparameter 12 und/oder der Zielobjektparameter 136 und/oder die Modellinformation 132 zentral für eine Mehrzahl von Sensorvorrichtungen 100 hinterlegt sein. Dies vereinfacht den Austausch der hinterlegten Daten mit anderen Maschinen und insbesondere mit anderen Fabrikationseinheiten und es kann so auf eine große Zahl von Daten zugegriffen werden. Die Daten können anonymisiert, d.h. ohne Information über die Fabrikationseinheiten abgelegt werden.

Insbesondere kann die Sensorvorrichtung 100, etwa die Sensoreinheit 110, mit der räumlich entfernten Datenverarbeitungseinheit, beispielsweise über ein Intranet oder das Internet, verbunden sein und das Sensorsignal 150 an die räumlich entfernte Datenverarbeitungseinheit übertragen. Die Auswerteeinrichtung 130 kann auf der räumlich entfernten Datenverarbeitungseinheit ausgebildet sein und das Sensorsignal 150 kann durch die räumlich entfernte Datenverarbeitungseinheit verarbeitet werden.

Die Auswerteeinrichtung 130 und/oder die Vorverarbeitungseinheit 120 können als Dienste auf der räumlich entfernten Datenverarbeitungseinheit ausgebildet sein und die Sensorvorrichtung 100, insbesondere die Sensoreinheit 110 kann dazu ausgebildet sein, auf die bereitgestellten Dienste zuzugreifen. Auch das für die Verarbeitung verwendete Modell kann auf der räumlich entfernten Datenverarbeitungseinheit als ein Dienst ausgeführt werden und mittels Trainingsdaten, die von mehreren, räumlich getrennten Sensoreinheiten 110 erzeugt und an die räumlich entfernte Datenverarbeitungseinheit übermittelt werden, trainiert werden oder trainiert worden sein. Die Dienste können insbesondere jeweils als Micro-Service ausgeführt werden.

Bei einer Ausführung der Auswerteeinrichtung 130 und/oder der Vorverarbeitungseinheit 120 auf einer räumlich entfernten Datenverarbeitungseinheit kann die Anzahl der angebundenen Sensorvorrichtungen 100 besonders einfach skaliert werden, da die Anzahl der möglichen Anwendungsfälle begrenzt sind bzw. sich ähneln. So kann auf einfache Weise, beispielsweise mittels eines exemplarischen Modells und/oder mittels eines exemplarischen Prozessparameters 12 und/oder mittels eines exemplarischen Zielobjektparameters 136, eine universelle Sensorvorrichtung 100 bereitgestellt werden, die dazu ausgebildet ist, eine Vielzahl unterschiedlicher Zielobjekte 20 zu detektieren.

### Bezugszeichen

- 1: Maschine
- 3: übergeordnete Steuereinheit
- 5: Aktor
- 6: Schneidstrahl
- 10: Prozess
- 12: Prozessparameter
- 14: direktes Prozessdatum
- 15: indirekter Prozessparameter
- 20: Zielobjekt
- 21: weiteres Zielobjekt
- 22: erste Geschwindigkeit
- 23: zweite Geschwindigkeit

- 100: Sensorvorrichtung
- 110: Sensoreinheit
- 112: Sender
- 114: Empfänger
- 116: Strahl
- 118: Erfassungsbereich
- 120: Vorverarbeitungseinheit
- 130: Auswerteeinrichtung
- 132: Modellinformation
- 134: weitere Modellinformation
- 136: Zielobjektparameter

- 150: Sensorsignal
- 152: Einzelsignal
- 154: Ausgangssignal
- 160: Zeit

- 201: Werkstück
- 202: freigetrenntes Werkstückteil
- 204: Werkstückauflage
- 206: Abfuhrposition
- 208: Aufnahmevorrichtung

## Patentansprüche

1. Maschine (1) zur Ausführung eines Prozesses (10),
wobei die Maschine (1) dazu ausgebildet ist, im Rahmen des Prozesses (10) ein Zielobjekt (20) zu beeinflussen oder zu erzeugen,
wobei die Maschine (1) eine Sensorvorrichtung (100) zur Detektion des Zielobjekts (20) umfasst,
wobei die Sensorvorrichtung (100) eine Sensoreinheit (110) und eine Auswerteeinrichtung (130) umfasst,
wobei die Sensoreinheit (110) dazu ausgebildet ist, das Zielobjekt (20) in einem Erfassungsbereich (118) der Sensoreinheit (110) zu erfassen und ein durch das Zielobjekt (20) beeinflussbares Sensorsignal (150) zu erzeugen,
wobei die Auswerteeinrichtung (130) dazu ausgebildet ist, das Sensorsignal (150) als eine erste Eingangsgröße zu verarbeiten und in Abhängigkeit von dem Sensorsignal (150) ein Ausgangssignal (154) zu erzeugen, welches die Detektion des Zielobjekts (20) anzeigt,
wobei die Auswerteeinrichtung (130) dazu ausgebildet ist, einen auf das Zielobjekt (20) einwirkenden Prozessparameter (12) des Prozesses (10) und/oder einen das Zielobjekt (20) charakterisierenden und durch den Prozess (10) beeinflussten Zielobjektparameter (136) als jeweils eine weitere Eingangsgröße zu verarbeiten und das Ausgangssignal (154) in Abhängigkeit von dem Prozessparameter (12) und/oder dem Zielobjektparameter (136) zu erzeugen,
**dadurch gekennzeichnet, dass**
die Maschine (1) als eine Werkzeugmaschine ausgebildet ist,
wobei die Maschine (1) dazu ausgebildet ist, bei der Ausführung des Prozesses (10) ein vorzugsweise plattenartiges Werkstück (201) unter Bildung eines freigetrennten Werkstückteils (202) trennend zu bearbeiten,
wobei das Zielobjekt (20) durch das Werkstückteil (202) gebildet wird, wobei die Maschine (1) dazu ausgebildet ist, bei der Ausführung des Prozesses (10) das Werkstückteil (202) von einer Werkstückauflage (204) durch freien Fall in eine Abfuhrposition (206) zu verbringen,
wobei die Sensoreinheit (110) derart angeordnet ist, dass das Zielobjekt (20) von der Sensoreinheit (110) während des feien Falls in die Abfuhrposition (206) erfasst wird,
wobei die Auswerteeinrichtung (130) dazu ausgebildet ist, das Zielobjekt (20) zu detektieren, um festzustellen, ob das Zielobjekt (20) die Abfuhrposition (206) erreicht hat.

2. Maschine (1) nach Anspruch 1,
wobei die Auswerteeinrichtung (130) dazu ausgebildet ist, als Prozessparameter (12) ein direktes Prozessdatum (14) des Prozesses (10) zu verarbeiten.

3. Maschine (1) nach Anspruch 2,
wobei das direkte Prozessdatum (14) ausgewählt ist aus der Gruppe von: einem Schneidgasdruck einer das Zielobjekt (20) bearbeitenden Trenneinrichtung, einer Umdrehungszahl eines das Zielobjekt (20) bearbeitenden Werkzeugs.

4. Maschine (1) nach einem der vorhergehenden Ansprüche,
wobei der Zielobjektparameter (136) eine geometrische Eigenschaft des Zielobjekts (20) repräsentiert, insbesondere eine Länge, eine Breite, eine Fläche, eine Kontur, eine Abmessung, ein kleinstes umhüllendes Rechteck oder eine konvexe Hülle des Zielobjekts (20).

5. Maschine (1) nach einem der vorhergehenden Ansprüche,
wobei der Zielobjektparameter (136) eine die Bewegung des Zielobjekts (20) in dem Erfassungsbereich (118) der Sensoreinheit (110) beeinflussende Größe repräsentiert, insbesondere eine Masse, einen Luftwiderstand, ein Material oder eine Dichte des Zielobjekts (20).

6. Maschine (1) nach einem der vorhergehenden Ansprüche,
wobei in der Auswerteeinrichtung (130) eine aus Trainingsdaten gewonnene Modellinformation (132) zur Abhängigkeit des Sensorsignals (150) von dem Prozessparameter (12) und/oder dem Zielobjektparameter (136) hinterlegt ist,
wobei die Modellinformation (132) einen Zusammenhang zwischen dem Prozessparameter (12) und möglichen Sensorsignalen (150) bei unterschiedlichen Werten des Prozessparameters (12) und/oder einen Zusammenhang zwischen dem Zielobjektparameter (136) und den möglichen Sensorsignalen (150) bei unterschiedlichen Werten des Zielobjektparameters (136) umfasst,
wobei die Auswerteeinrichtung (130) dazu ausgebildet ist, das Sensorsignal (150), sowie den Prozessparameter (12) und/oder den Zielobjektparameter (136) anhand der Modellinformation (132) zu verarbeiten.

7. Maschine (1) nach Anspruch 6,
wobei die Modellinformation (132) zur Abhängigkeit des Sensorsignals (150) von dem Prozessparameter (12) und/oder von dem Zielobjektparameter (136) in der Auswerteeinrichtung (130) in einem regelbasierten Modell, in einem Entscheidungsbaum, als ein Regressionsmodell, als ein neuronales Netz oder als ein rekursives neuronales Netz hinterlegt ist.

8. Maschine (1) nach Anspruch 7,
wobei in der Auswerteeinrichtung (130) eine weitere Modellinformation (132) zur Abhängigkeit des Sensorsignals (150) von dem Prozessparameter (12) und/oder dem Zielobjektparameter (136) hinterlegt ist,
wobei die Auswerteeinrichtung (130) dazu ausgebildet ist, die Modellinformation (132) oder die weitere Modellinformation (132) anhand des Prozessparameters (12) und/oder des Zielobjektparameters (136) auszuwählen.

9. Maschine (1) nach einem der vorhergehenden Ansprüche,
wobei die Sensoreinheit (110) dazu ausgebildet ist, das Sensorsignal (150) in einer von dem Prozessparameter (12) und/oder von dem Zielobjektparameter (136) abhängigen Frequenz auszulesen.

10. Maschine (1) nach einem der vorhergehenden Ansprüche,
wobei die Sensorvorrichtung (100) zur Detektion eines von dem Prozess (10) beeinflussten weiteren Zielobjekts (21) ausgebildet ist,
wobei die Auswerteeinrichtung (130) dazu ausgebildet ist, ein weiteres Ausgangssignal zu erzeugen, welches die Detektion des weiteren Zielobjekts (21) anzeigt.

11. Maschine (1) nach einem der vorhergehenden Ansprüche,
wobei die Sensoreinheit (110) eine Mehrzahl von Sendern (112) zum Aussenden von Licht- oder Laserstrahlen (116) und eine Mehrzahl von Empfängern (114) zum Empfangen der Strahlen (116) aufweist,
wobei die Empfänger (114) dazu ausgebildet sind, Einzelsignale (152) des Sensorsignals (150) auf Grundlage der einzelnen empfangenen Strahlen (116) zu erzeugen.

12. Maschine (1) nach Anspruch 11,
wobei das Sensorsignal (150) durch das Zielobjekt (20) dadurch beeinflussbar ist, dass das Zielobjekt (20) mindestens einen der Strahlen (116) unterbricht.

13. Maschine (1) nach einem der Ansprüche 11 und 12,
wobei die Sensoreinheit (110) dazu ausgebildet ist, die Einzelsignale (152) in einer von dem Prozessparameter (10) und/oder dem Zielobjektparameter (136) abhängigen Reihenfolge auszulesen.

## Claims

1. A machine (1) for executing a process (10),
wherein the machine (1) is configured to influence or to generate a target object (20) as part of the process (10),
wherein the machine (1) comprises a sensor apparatus (100) for detecting the target object (20),
wherein the sensor apparatus (100) comprises a sensor unit (110) and an evaluation device (130),
wherein the sensor unit (110) is configured to detect the target object (20) in a detection zone (118) of the sensor unit (110) and to generate a sensor signal (150) that can be influenced by the target object (20),
wherein the evaluation device (130) is configured to process the sensor signal (150) as a first input variable and to generate an output signal (154), which indicates the detection of the target object (20), in dependence on the sensor signal (150),
wherein the evaluation device (130) is configured to process a process parameter (12) of the process (10), which acts on the target object (20), and/or a target object parameter (136), which characterizes the target object (20) and is influenced by the process (10), as a respective further input variable, and to generate the output signal (154) in dependence on the process parameter (12) and/or the target object parameter (136), **characterized in that**
the machine (1) is configured as a machine tool,
wherein the machine (1) is configured, on the execution of the process (10), to machine a workpiece (201), preferably a plate-like workpiece (201), in a separating manner while forming a cut-free workpiece part (202),
wherein the target object (20) is formed by the workpiece part (202),
wherein the machine (1) is configured, on the execution of the process (10), to move the workpiece part (202) from a workpiece support (204) into a removal position (206) by free fall,
wherein the sensor unit (110) is arranged such that the target object (20) is detected by the sensor unit (110) during the free fall into the removal position (206),
wherein the evaluation device (130) is configured to detect the target object (20) in order to determine whether the target object (20) has reached the removal position (206).

2. A machine (1) according to claim 1,
wherein the evaluation device (130) is configured to process a direct process datum (14) of the process (10) as the process parameter (12).

3. A machine (1) according to claim 2,
wherein the direct process datum (14) is selected from the group of: a cutting gas pressure of a separating device machining the target object (20), a number of revolutions of a tool machining the target object (20).

4. A machine (1) according to any one of the preceding claims,
wherein the target object parameter (136) represents a geometric property of the target object (20), in particular a length, a width, an area, a contour, a dimension, a very small enveloping rectangle or a convex envelope of the target object (20).

5. A machine (1) according to any one of the preceding claims,
wherein the target object parameter (136) represents a variable influencing the movement of the target object (20) in the detection zone (118) of the sensor unit (110), in particular a mass, an air resistance, a material or a density of the target object (20).

6. A machine (1) according to any one of the preceding claims,
wherein model information (132), obtained from training data, on the dependence of the sensor signal (150) on the process parameter (12) and/or on the target object parameter (136) is stored in the evaluation device (130),
wherein the model information (132) comprises a relationship between the process parameter (12) and possible sensor signals (150) at different values of the process parameter (12) and/or a relationship between the target object parameter (136) and the possible sensor signals (150) at different values of the target object parameter (136),
wherein the evaluation device (130) is configured to process the sensor signal (150) and the process parameter (12) and/or the target object parameter (136) on the basis of the model information (132).

7. A machine (1) according to claim 6,
wherein the model information (132) on the dependence of the sensor signal (150) on the process parameter (12) and/or on the target object parameter (136) is stored in the evaluation device (130) in a rule-based model, in a decision tree, as a regression model, as a neural network or as a recursive neural network.

8. A machine (1) according to claim 7,
wherein further model information (132) on the dependence of the sensor signal (150) on the process parameter (12) and/or on the target object parameter (136) is stored in the evaluation device (130),
wherein the evaluation device (130) is configured to select the model information (132) or the further model information (132) based on the process parameter (12) and/or the target object parameter (136).

9. A machine (1) according to any one of the preceding claims,
wherein the sensor unit (110) is configured to read out the sensor signal (150) at a frequency dependent on the process parameter (12) and/or on the target object parameter (136).

10. A machine (1) according to any one of the preceding claims,
wherein the sensor apparatus (100) is configured to detect a further target object (21) influenced by the process (10),
wherein the evaluation device (130) is configured to generate a further output signal that indicates the detection of the further target object (21).

11. A sensor apparatus (100) according to any one of the preceding claims,
wherein the sensor unit (110) comprises a plurality of transmitters (112) for transmitting light or laser beams (116) and a plurality of receivers (114) for receiving the beams (116),
wherein the receivers (114) are configured to generate individual signals (152) of the sensor signal (150) on the basis of the individual received beams (116).

12. A machine (1) according to claim 11,
wherein the sensor signal (150) can be influenced by the target object (20) in that the target object (20) interrupts at least one of the beams (116).

13. A machine (1) according to one of the claims 11 and 12,
wherein the sensor unit (110) is configured to read out the individual signals (152) in an order dependent on the process parameter (10) and/or on the target object parameter (136).

## Revendications

1. Machine (1) pour l'exécution d'un processus (10),
dans laquelle
la machine (1) est conçue pour influencer ou générer un objet cible (20) dans le cadre du processus (10),
la machine (1) comprend un dispositif capteur (100) destiné à détecter l'objet cible (20),
le dispositif capteur (100) comprend une unité de capteur (110) et un dispositif d'évaluation (130),
l'unité de capteur (110) est conçue pour détecter l'objet cible (20) dans une zone de détection (118) de l'unité de capteur (110) et pour générer un signal de capteur (150) susceptible d'être influencé par l'objet cible (20), le dispositif d'évaluation (130) est conçu pour traiter, comme première grandeur d'entrée, le signal de capteur (150) et pour générer, en fonction du signal de capteur (150), un signal de sortie (154) qui indique la détection de l'objet cible (20),
le dispositif d'évaluation (130) est conçu pour traiter, comme autre grandeur d'entrée respective, un paramètre de processus (12) du processus (10) agissant sur l'objet cible (20) et/ou un paramètre d'objet cible (136) caractérisant l'objet cible (20) et influencé par le processus (10), et pour générer le signal de sortie (154) en fonction du paramètre de processus (12) et/ou du paramètre d'objet cible (136),
**caractérisée en ce que**
la machine (1) est conçue comme une machine-outil,
la machine (1) étant conçue pour, lors de l'exécution du processus (10), usiner par séparation une pièce à usiner (201), de préférence en forme de plaque, en formant une partie de pièce à usiner (202) séparée libre,
l'objet cible (20) étant formé par la partie de pièce à usiner (202),
la machine (1) étant conçue pour, lors de l'exécution du processus (10), amener la partie de pièce à usiner (202) depuis un support de pièce à usiner (204) par chute libre vers une position d'évacuation (206),
l'unité de capteur (110) étant disposée de telle sorte que l'objet cible (20) est détecté par l'unité de capteur (110) pendant la chute libre vers la position d'évacuation (206),
le dispositif d'évaluation (130) étant conçu pour détecter l'objet cible (20) afin de déterminer si l'objet cible (20) a atteint la position d'évacuation (206).

2. Machine (1) selon la revendication 1,
dans laquelle le dispositif d'évaluation (130) est conçu pour traiter, comme paramètre de processus (12), une donnée de processus directe (14) du processus (10).

3. Machine (1) selon la revendication 2,
dans laquelle la donnée de processus directe (14) est choisie parmi le groupe comprenant : une pression de gaz de coupe d'un dispositif de séparation usinant l'objet cible (20), une vitesse de rotation d'un outil usinant l'objet cible (20).

4. Machine (1) selon l'une des revendications précédentes,
dans laquelle le paramètre d'objet cible (136) représente une caractéristique géométrique de l'objet cible (20), en particulier une longueur, une largeur, une surface, un contour, une dimension, un plus petit rectangle enveloppant ou une enveloppe convexe de l'objet cible (20).

5. Machine (1) selon l'une des revendications précédentes,
dans laquelle le paramètre d'objet cible (136) représente une grandeur influençant le mouvement de l'objet cible (20) dans la zone de détection (118) de l'unité de capteur (110), en particulier une masse, une traînée, un matériau ou une densité de l'objet cible (20).

6. Machine (1) selon l'une des revendications précédentes,
dans laquelle une information de modèle (132), obtenue à partir de données d'entraînement, concernant la dépendance du signal de capteur (150) par rapport au paramètre de processus (12) et/ou au paramètre d'objet cible (136), est mémorisée dans le dispositif d'évaluation (130),
l'information de modèle (132) inclut une relation entre le paramètre de processus (12) et des signaux de capteur possibles (150) à différentes valeurs du paramètre de processus (12), et/ou une relation entre le paramètre d'objet cible (136) et les signaux de capteur possibles (150) à différentes valeurs du paramètre d'objet cible (136),
le dispositif d'évaluation (130) est conçu pour traiter le signal de capteur (150) ainsi que le paramètre de processus (12) et/ou le paramètre d'objet cible (136) en se basant sur l'information de modèle (132).

7. Machine (1) selon la revendication 6,
dans laquelle l'information de modèle (132) concernant la dépendance du signal de capteur (150) par rapport au paramètre de processus (12) et/ou au paramètre d'objet cible (136) est mémorisée dans le dispositif d'évaluation (130), dans un modèle basé sur des règles, dans un arbre de décision, comme un modèle de régression, comme un réseau neuronal ou comme un réseau neuronal récursif.

8. Machine (1) selon la revendication 7,
dans laquelle une autre information de modèle (132) concernant la dépendance du signal de capteur (150) par rapport au paramètre de processus (12) et/ou au paramètre d'objet cible (136) est mémorisée dans le dispositif d'évaluation (130),
le dispositif d'évaluation (130) est conçu pour sélectionner l'information de modèle (132) ou l'autre information de modèle (132) en se basant sur le paramètre de processus (12) et/ou le paramètre d'objet cible (136).

9. Machine (1) selon l'une des revendications précédentes,
dans laquelle l'unité de capteur (110) est conçue pour lire le signal de capteur (150) à une fréquence qui dépend du paramètre de processus (12) et/ou du paramètre d'objet cible (136).

10. Machine (1) selon l'une des revendications précédentes,
dans laquelle le dispositif capteur (100) est conçu pour détecter un autre objet cible (21) influencé par le processus (10),
le dispositif d'évaluation (130) est conçu pour générer un autre signal de sortie qui indique la détection de l'autre objet cible (21).

11. Machine (1) selon l'une des revendications précédentes,
dans laquelle l'unité de capteur (110) comprend une pluralité d'émetteurs (112), destinés à émettre des faisceaux lumineux ou laser (116), et une pluralité de récepteurs (114), destinés à recevoir les faisceaux (116), les récepteurs (114) sont conçus pour générer des signaux individuels (152) du signal de capteur (150) en se basant sur les faisceaux (116) individuels reçus.

12. Machine (1) selon la revendication 11,
dans laquelle le signal de capteur (150) peut être influencé par l'objet cible (20) du fait que l'objet cible (20) interrompt au moins l'un des faisceaux (116).

13. Machine (1) selon l'une des revendications 11 et 12,
dans laquelle l'unité de capteur (110) est conçue pour lire les signaux individuels (152) dans un ordre chronologique qui dépend du paramètre de processus (10) et/ou du paramètre d'objet cible (136).
